# EUROPÄISCHE PATENTSCHRIFT

(11) **EP 3 446 273 B1**
(45) Veröffentlichungstag und Bekanntmachung des Hinweises auf die Patenterteilung: **16.08.2023**
(21) Anmeldenummer: 17718905.7
(22) Anmeldetag: 21.04.2017
(51) Int. Cl.: G06Q 20/36

(54) **ELEKTRONISCHES VERFAHREN ZUR KRYPTOGRAPHISCH GESICHERTEN ÜBERWEISUNG EINES BETRAGS EINER KRYPTOWÄHRUNG**
ELECTRONIC METHOD FOR THE CRYPTOGRAPHICALLY SECURE TRANSMISSION OF A CRYPTOCURRENCY AMOUNT
PROCÉDÉ ÉLECTRONIQUE DE VIREMENT SÉCURISÉ PAR VOIE CRYPTOGRAPHIQUE D'UN MONTANT D'UNE MONNAIE CRYPTOGRAPHIQUE

(30) Priorität: 22.04.2016 DE 102016206916
(43) Veröffentlichungstag der Anmeldung: 27.02.2019
(73) Patentinhaber: Bundesdruckerei GmbH, 10969 Berlin (DE)
(72) Erfinder: RÜCKRIEMEN, Jörg, 10999 Berlin (DE)
(74) Vertreter: Richardt Patentanwälte PartG mbB
(86) Internationale Anmeldenummer: PCT/EP2017/059456
(87) Internationale Veröffentlichungsnummer: WO 2017/182601

(56) Entgegenhaltungen:
- EP-A1- 1 282 087
- EP-A1- 2 975 570
- WO-A1-2011/006912
- GB-A- 2 370 382
- PILKINGTON ET AL: "Chapter 11: Blockchain Technology: Principles and Applications", 24 September 2015 (2015-09-24), RESEARCH HANDBOOK ON DIGITAL TRANSFORMATIONS, EDWARD ELGAR PUBLISHING, GB, PAGE(S) 225 - 253, XP009515602, ISBN: 978-1-78471-775-9
- ARTHUR GERVAIS ET AL: "Is Bitcoin a Decentralized Currency?", IACR, INTERNATIONAL ASSOCIATION FOR CRYPTOLOGIC RESEARCH, vol. 20140305:114802, 3 December 2013 (2013-12-03), pages 1-11, XP061015216, [retrieved on 2013-12-03]
- Jae Kwon: "Tendermint: Consensus without Mining", , 19 March 2015 (2015-03-19), XP055493960, Retrieved from the Internet: URL:https://web.archive.org/web/2015031903 5333if_/http://tendermint.com:80/docs/tend ermint.pdf [retrieved on 2018-07-19]
- Marc Pilkington: "Blockchain technology: principles and applications" In: "Blockchain technology: principles and applications", 15 April 2016 (2016-04-15), SSRN, XP055884527, pages 1-39, DOI: 10.4337/9781784717766.00019, Retrieved from the Internet: URL:https://papers.ssrn.com/sol3/papers.cf m?abstract_id=2662660> * the whole document *
- Anonymous: "Blockchain Technology: Principles and Applications by Marc Pilkington :: SSRN", , 3 February 2016 (2016-02-03), XP055884574, Retrieved from the Internet: URL:https://web.archive.org/web/2016020322 4706/https://papers.ssrn.com/sol3/papers.c fm?abstract_id=2662660 [retrieved on 2022-01-27]
- DEV JEGA ANISH: "Bitcoin mining acceleration and performance quantification", ELECTRICAL&COMPUTER ENGINEERING (CCECE), 2012 25TH IEEE CANADIAN CONFERENCE ON, IEEE, 4 May 2014 (2014-05-04), pages 1-6, XP032643849, ISSN: 0840-7789, DOI: 10.1109/CCECE.2014.6900989 ISBN: 978-1-4673-1431-2 [retrieved on 2014-09-17]
- Franco Pedro: "Understanding Bitcoin Cryptography, engineering, and economics", , 1 January 2015 (2015-01-01), pages 1-291, XP055467603, ISBN: 978-1-119-01915-2 Retrieved from the Internet: URL:http://porn.jules-aubert.info/cul/humb le_ebooks/Bitcoin_Blockchain_Cryptocurrenc y/understanding_bitcoin.pdf [retrieved on 2018-04-16]
- Anonymous: "Trusted third party - Wikipedia", , 6 February 2017 (2017-02-06), XP055888512, Retrieved from the Internet: URL:https://en.wikipedia.org/w/index.php?t itle=Trusted_third_party&oldid=764078053 [retrieved on 2022-02-08]

## Beschreibung

Die vorliegende Erfindung betrifft ein elektronisches Verfahren zur kryptographisch gesicherten Überweisung eines Betrags einer Kryptowährung. Ferner betrifft die vorliegende Erfindung ein Servercomputersystem, einen Servercomputer, ein Clientcomputersystem, ein Computersystem sowie ein Datenverarbeitungssystem zur kryptographisch gesicherten Überweisung eines Betrags einer Kryptowährung. Aus dem Stand der Technik sind an sich bereits verschiedene Kryptowährungen (sogenannte cryptocurrencies, vgl. https://en.wikipedia.org/wiki/Cryptocurrency) bekannt, insbesondere Bitcoin.

Bitcoin wurde im Jahre 2008 in einem White Paper unter dem Pseudonym Satosh Nakamoto erstmals beschrieben ("Bitcoin: Peer-to-Peer Electronic Cash System (https://bitcoin.org/bitcoin.pdf). Bitcoin.Org October 2008). Die verschiedenen Komponenten des Bitcoin-Netzwerks, einschließlich der Blockchain, sind unter anderem in "Mastering Bitcoin Unlocking Digital Cryto Currencies, Andreas N. Antonopoulos, O'Reilly Media, Inc., 2015, ISBN 978-1-449-37404-4 im Detail offenbart.

Neben Bitcoin sind bereits verschiedene weitere ähnliche Kryptowährungen bekannt, die zur Herstellung von Vertrauen ebenfalls die Blockketten oder auch "Blockchain" Technologie (vgl. https://en.wikipedia.org/wiki/Block chain (database)) verwenden, wie zum Beispiel Litecoin. Darüber hinaus gibt es Versuche die Blocckette auch für Anwendung jenseits von Bitcoin zu verwenden, wie z. B. Ethereum, vergleiche http://en.wikipedia.org/wiki/ethereum.

Die EP 2 975 570 A1 beschreibt ein Verfahren zur Absicherung von Zugriffen auf Wallets in denen Kryptowährungen und/oder deren Schlüssel abgelegt sind, mit einem Transaktions-Server, auf dem eine Transaktionslogik abläuft, zum Durchführen einer Transaktion gegenüber einem Client-Gerät, das durch einen Benutzer gesteuert wird, wobei jedem Benutzer ein Benutzer-Passwort und eine eindeutige ID zugewiesen wird und mit einem Wallet-Server, auf dem die Wallets verwaltet werden. Zum Abschluss einer Transaktion erfolgt der Zugriff vom Transaktions-Server auf den Wallet-Server auf der Basis des Benutzer-Passworts, eines asymmetrischen Server-Schlüssel-Paars und eines symmetrischen Benutzer-Schlüssels pro Benutzer.

Ein zentrales Element von Bitcoin ist die sogenannte Blockchain, auch Blockkette genannt, in welcher alle Bitcoin-Transaktionen verzeichnet werden. Die Blockchain besteht aus einer Reihe von Datenblöcken, in denen jeweils eine oder mehrere Transaktionen zusammengefasst und mit einer Prüfsumme versehen sind. Neue Blöcke der Blockchain werden in einem rechenintensiven Prozess erzeugt, der als sogenanntes Mining bezeichnet wird. Diese neu erzeugten Blöcke werden anschließend der Blockchain hinzugefügt und über das Netzwerk an alle Teilnehmer verbreitet.

Die in einem Block enthaltenen Transaktionen werden durch einen Merkle-Baum paarweise miteinander gehasht und nur der letzte resultierende Hashwert, der Root-Hash bzw. Wurzelhash, als Prüfsumme in dem Header bzw. der Kopfzeile des Blocks vermerkt. Das Verketten der Blöcke erfolgt mithilfe dieses Root-Hashes. Jeder Block enthält in seinem Header den Hash des gesamten Headers des vorherigen Blocks. Durch diese Verkettung wird die Reihenfolge der einzelnen Blöcke eindeutig festgelegt. Außerdem wird dadurch auch das nachträgliche Verändern vorangegangener Blöcke bzw. der in diesen enthaltenen Transaktionen verhindert, da für eine Veränderung auch alle nachfolgenden Blöcke ebenfalls neu erzeugt werden müssten.

Eine Überweisung eines Bitcoin-Betrags zwischen zwei Teilnehmern wird in Form einer sogenannten Transaktion abgewickelt, die im Wesentlichen wie eine Bank-überweisung funktioniert. Der Zahlungssender benötigt hierzu eine Bitcoin-Adresse des Zahlungsempfängers, der der zu zahlende Betrag zugeordnet werden soll, sowie eine oder mehrere eigene Bitcoin-Adressen, der oder denen Bitcoin-Beträge zumindest in der Höhe des zu überweisenden Betrags zugeordnet sind. In der Transaktion gibt der Zahlungssender an, dass der zu überweisende Bitcoin-Betrag, welcher seinen Bitcoin-Adressen zugeordnet ist, der Bitcoin-Adresse des Zahlungsempfängers neu zugeordnet werden soll. Zur Bestätigung seiner Verfügungsberechtigung über den zu überweisenden Betrag weist der Zahlungssender den Besitz bzw. die Kenntnis eines oder mehrerer geheimer kryptographischer Schlüssel nach, welche seinen entsprechenden Bitcoin-Adressen zugeordnet sind.

Neue Blöcke der Blockchain werden durch das sogenannte Mining erzeugt und anschließend der Blockchain hinzugefügt. Dieser Vorgang des Minings ist sehr rechenintensiv. Im Gegenzug zu seinen Aufwendungen, insbesondere seinen Energieaufwendungen, erhält der Teilnehmer, der einen gültigen Block erzeugt, als Belohnung neu geschöpfte Bitcoins sowie Gebühren für die in dem Block enthaltenen Transaktionen. Da es sich um ein dezentrales, anonymes System handelt, in dem alle Teilnehmer gleichberechtigt sind, können sich die Teilnehmer grundsätzlich nicht gegenseitig vertrauen. Vertrauen entsteht vielmehr durch Mehrheitsentscheid. Gültige Blöcke können nur durch rechenintensives Mining erschaffen werden. Somit vertrauen die Teilnehmer der längsten gültigen Blockchain, da hinter dieser die meiste Rechenleistung und somit die Mehrheit der Teilnehmer vermutet wird.

Praktisch die gesamte Rechenleistung des Bitcoin-Netzwerks fällt beim Mining auf das Lösen einer kryptographischen Aufgabe, dem so genannten Proof-of-Work. Damit sollt sichergestellt werden, dass das Erzeugen gültiger Blöcke mit einem genügend hohen Aufwand verbunden ist, sodass eine nachträgliche Modifikation der Blockkette praktisch ausgeschlossen werden kann. Eine solche nachträgliche Modifikation könnte beispielsweise durch erzeugen eines alternativen Asts der Blockchain versucht werden. Damit diesem alternativen Ast vertraut wird, müsste er mehr Rechenleistung umfassen als der bisherig allgemein akzeptierte Ast der Blockchain. Hierfür wäre aber eine so umfangreiche Rechenleistung notwendig, dass davon ausgegangen wird, dass diese durch einzelne Teilnehmer oder Teilnehmergruppen nicht aufzubringen ist.

Die Teilnehmer, welche Blöcke erzeugen, werden für das Bereitstellen der entsprechenden Rechenleistung mit Währungseinheiten entlohnt. Je größer die Rechenleistung eines Teilnehmers, desto wahrscheinlicher ist es, dass er einen gültigen Block erzeugt und eine entsprechende Entlohnung erhält. Somit kommt es zu einem Wettbewerb unter den Teilnehmern, bei dem sie versuchen, ihren Anteil an der Gesamtrechenleistung des Netzwerks zu vergrößern, um die Wahrscheinlichkeit einer Entlohnung zu erhöhen. Damit steigt aber auch der Ressourcenverbrauch, beispielsweise in Form von Strom sowie verwendeter Hardware.

Bitcoin basiert darauf, dass die Blockchain in etwa gleichbleibenden Zeitabständen fortgeschrieben wird. Hierbei wird der Schwierigkeitsgrad des für die Erzeugung eines gültigen Blocks zu lösenden kryptographischen Problems zum Beispiel so angepasst, dass etwa alle 10 Minuten ein neuer Block erzeugt wird. Um dies zu erreichen wird der Schwierigkeitsgrad des zu lösenden kryptographischen Problems so gewählt, dass die Lösung im statischen Mittel entsprechend lange, z.B. 10 Minuten dauert.

Bei dem Bitcoin-System handelt es sich um ein offenes System, an dem jeder teilnehmen kann. Die Anzahl der Teilnehmer, welche im Wettbewerb gegeneinander versuchen gültige Transaktionsblöcke zu erzeugen, ist somit grundsätzlich unbeschränkt. Im Ergebnis steigt die Gesamtrechenleistung des Systems aufgrund des Wettbewerbs neu hinzukommender Teilnehmer mit der Zeit stetig an, weshalb sich der Schwierigkeitsgrad des kryptographischen Systems laufend erhöht, damit die statistische Zeitdauer zum Finden einer Lösung konstant gehalten wird.

Die Schwierigkeit des kryptographischen Problems und damit der Umfang der zur Lösung einzusetzenden Ressourcen ist dabei unabhängig sowohl von der Anzahl der Transaktionen als auch dem Wert der Transaktionen. Der Aufwand, insbesondere der Stromverbrauch, ist somit in erster Linie von der Anzahl der am Wettbewerb um das Erzeugen gültiger Blöcke beteiligter Teilnehmer sowie den von diesen eingesetzten technischen Ressourcen abhängig. Dies hat zur Folge, dass der Ressourcenverbrauch unabhängig von dem Umfang des über die Blockchain abgewickelten Zahlungsverkehrs prinzipiell beliebig steigt. Dies kann im Ergebnis zu erheblichen Ressourcenverschwendungen führen.

Der Erfindung liegt demgegenüber die Aufgabe zugrunde, ein verbessertes elektronisches Verfahren zur kryptographisch gesicherten Überweisung eines Betrags einer Kryptowährung bereitzustellen, welches weniger Ressourcen verbraucht, insbesondere weniger Strom, sowie entsprechende elektronische Geräte zur Implementierung des Verfahrens, d.h. insbesondere ein Datenverarbeitungssystem zur kryptographisch gesicherten Überweisung eines Betrags einer Kryptowährung. Das vorliegende Verfahren zielt sowohl auf Blockchains von Unternehmen ("corporate blockchains") als auch auf private Blockchains. Dabei wird bewusst die völlige Offenheit des Bitcoins eingeschränkt. Gemäß Ausführungsformen kann das Mining, d.h. das Erzeugen neuer Blöcke der Blockchain nur noch von autorisierten Minern bzw. Transaktionsservern ausgeführt werden. Diese Einschränkung gegenüber dem Bitcoin ermöglicht eine signifikante Ressourceneinsparung.

Die der Erfindung zugrunde liegenden Aufgaben werden jeweils durch die Merkmale der unabhängigen Patentansprüche gelöst. Bevorzugte Ausführungsformen der Erfindung sind in den abhängigen Patentansprüchen angegeben.

Ausführungsformen umfassen ein elektronisches Verfahren zur kryptographisch gesicherten Überweisung eines Betrags einer Kryptowährung durch eine Transaktion des Betrags von einer einem ersten Client zugeordneten Ausgangsadresse auf eine einem zweiten Client zugeordnete Zieladresse. Dabei ist eine Mehrzahl von Clients vorgesehen, welche zumindest den ersten und den zweiten Client umfasst, wobei auf den Clients jeweils ein Walletprogramm zur Realisierung eines Client-Nodes der Kryptowährung installiert ist. Die Walletprogramme sind jeweils dazu konfiguriert asymmetrische kryptographische Walletschlüsselpaare zu erzeugen, zu speichern und zu verwalten, Transaktionsnachrichten zur Überweisung von Beträgen der Kryptowährung zu erzeugen und eine Blockchain der Überweisungshistorie der Kryptowährung zu prüfen. Die Ausgangsadresse ist einem ersten kryptographischen Walletschlüsselpaare des ersten Walletprogramms des ersten Clients zugeordnet und die Zieladresse einem zweiten kryptographische Walletschlüsselpaare des zweiten Walletprogramms des zweiten Clients.

Zudem ist ein Transaktionsserver vorgesehen, auf dem ein Transaktionsprogramm zur Realisierung eines Server-Nodes der Kryptowährung installiert ist. Das Transaktionsprogramm ist dazu konfiguriert Blöcke der Blockchain mit Transaktionsdaten zu erzeugen, wobei der Transaktionsserver einen privaten und einen öffentlichen Serverschlüssel eines asymmetrischen Serverschlüsselpaars umfasst. Der Transaktionsserver umfasst ein Serverzertifikat einer hierarchischen PKI mit einer zentralen Wurzelzertifizierungsinstanz, welches dazu konfiguriert ist als Nachweis der Authentizität des öffentlichen Serverschlüssels und der Berechtigung des Transaktionsservers zum Erzeugen von Blöcken der Blockchain zu dienen.

Das Verfahren umfasst ferner:
- Empfangen von Transaktionsnachrichten der Client-Nodes durch den Transaktionsserver, wobei eine der Transaktionsnachrichten von dem ersten Client stammt und eine Transaktion des Betrags von der Ausgangsadresse auf die Zieladresse umfasst,
- Prüfen der Gültigkeit der Transaktionsnachrichten durch den Transaktions-server,
- Erzeugen eines Blocks für die Blockchain durch den Transaktionsserver, wobei der erzeugte Block empfangene Transaktionsnachrichten umfasst, deren Gültigkeit durch den Transaktionsserver bestätigt wurde,
- Signieren des Blocks mit dem geheimen Serverschlüssel,
- Bereitstellen des Serverzertifikats für die Client-Nodes zum Überprüfen der Gültigkeit des erzeugten Blocks der Blockchain.

Unter einem "Walletprogramm" oder kurz "Wallet" wird hier und im Folgenden ein Programm, insbesondere eine App, zur Verfügungstellung einer persönlichen digitalen Brieftasche in der Kryptowährung verstanden, durch welche ein Client-Node der Kryptowährung gebildet wird; vergleiche auch "Mastering Bitcoins", Quick Glossary XXI. sowie Kapitel 4, insbesondere Seiten 86 bis 98. Wallets können i.a. Zieladressen erzeugen. Das Signieren ist eine bekannte Standardfunktion von Wallets zum Schutz von Adressen und zur Identifizierung von Wallets.

Unter einem "Client-Node" der Kryptowährung wird hier und im Folgenden ein elektronisches Gerät verstanden, beispielsweise ein Mobilfunkgerät oder ein Servercomputer, der an das Internet angeschlossen ist und Transaktionsnachrichten erzeugen und senden und/oder von anderen Client-Nodes empfangen kann, um hierdurch Zahlungen zu leisten bzw. entgegenzunehmen. Insbesondere kann auf einem Client-Node, wie etwa einem Mobilfunkgerät, ein Walletprogramm installiert sein.

Unter einem "Transaktionsserver" der Kryptowährung, auch Mining-Node bzw. Miner genannt, wird hier und im Folgenden ein Server verstanden, der ein Transaktionsprogramm aufweist und zu Validierung von Transaktionen und zur Fortschreibung der Blockchain dient. Ein Transaktionsserver empfängt von den Walletprogrammen Client-Nodes Transaktionsnachrichten, um diese zu validieren. Nach Ausführungsformen kann dies in einem zeitlichen Wettbewerb mit den anderen Transaktionsservern der Kryptowährung erfolgen. Der erste Transaktionsserver, dem die Validierung einer Transaktionsnachricht gelingt, erzeugt einen weiteren Block der Blockchain und signalisiert dies an die anderen Mining Nodes, vergleiche hierzu auch "Mastering Bitcoin", Chapter VIII, Mining and Consensus, Seite 175 ff.

Unter einer "Blockchain" wird hier und im Folgenden eine geordnete Datenstruktur verstanden, wobei jeder Block der Blockchain durch einen Hash-Wert identifiziert wird und einen Vorgängerblock in der Blockchain referenziert, vergleiche https://en.wikipedia.org/wiki/Block chain (database) und "Mastering Bitcoin", Chapter 7, The Blockchain, Seite 161 ff.

Unter einer "Transaktionsnachricht" wird und im Folgenden hier eine Nachricht verstanden, in der eine Transaktion zur Überweisung eines Betrags der Kryptowährung spezifiziert ist, vergleiche "Mastering Bitcoin", Seiten 16 - 25, insbesondere auf Seite 25 der Abschnitt "How it propagates".

Unter einer "Zieladresse" wird und im Folgenden hier eine Adresse verstanden, nämlich die sogenannte "Destination Adress", durch die der Zahlungsempfänger des zu überweisenden Betrags festgelegt wird; vergleiche "Mastering Bitcoin", Seite 17 sowie Kapitel Bitcoin Addresses, Seiten 70 - 72. Zur Generierung einer Zieladresse wird durch das Walletprogramm des Teilnehmers, der Zahlungen empfangen möchte, ein asymmetrisches kryptographisches Schlüsselpaar bestehend aus einem öffentlichen Schlüssel und einem privaten Schlüssel erzeugt. Durch Bildung eines Hash-Werts aus dem öffentlichen Schlüssel wird dann eine Zieladresse generiert.

Unter einem "Servercomputer" wird hier und im Folgenden ein Computer verstanden, der an das Internet angeschlossen ist, und als Client-Node der Kryptowährung ausgebildet ist. Bei dem Servercomputer kann es sich um einen virtuellen Server, einen einzelnen Computer oder ein verteiltes Computersystem handeln.

Unter einem "Zertifikat" wird hier und im Folgenden ein digitales Zertifikat verstanden, welches auch als Public-Key-Zertifikat bezeichnet wird. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf zeroknowledge Kryptosystemen möglich. Beispielsweise kann das Zertifikat dem Standard X.509 oder einem anderen Standard entsprechen.

Die PKI stellt ein System zum Ausstellen, Verteilen und Prüfen digitaler Zertifikate bereit. Ein digitales Zertifikat dient in einem asymmetrischen Kryptosystemen dazu, die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikates, des sogenannten Wurzelzertifikats, und des durch dieses zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate sind daher bei der Absicherung elektronischer Kommunikation durch asymmetrische kryptographische Verfahren ein bewährtes Mittel um Berechtigungen nachzuweisen. Zertifikate dokumentieren die Authentizität und/oder weitere Eigenschaften/Berechtigungen des Eigentümers eines öffentlichen Schlüssels (Signaturprüfschlüssel), welche durch eine unabhängige, glaubwürdige Instanz (Zertifizierungsdienstanbieter/ZDA), insbesondere durch eine Wurzelzertifizierungsinstanz oder dieser untergeordneten Instanzen, d.h. im Allgemeinen die das Zertifikat zuteilenden Zertifizierungsinstanz, bestätigen werden. Zertifikate werden in der Regel einem breiten Personenkreis zur Verfügung gestellt, um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" oder "elektronische Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem einem Zertifikat zugeordneten privaten Schlüssel eines kryptographischen Schlüsselpaares verschlüsselter Hashwert. Die Besonderheit einer solchen Signatur besteht darin, dass deren Urheberschaft und Zugehörigkeit zu einer bestimmten Person oder Instanz durch jeden Dritten geprüft werden kann.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einem "digitalen Speichermedium", im Folgenden auch kurz "Speicher" genannt, werden hier und im Folgenden sowohl flüchtige als auch nicht flüchtige elektronische Speicher verstanden. Unter einem "nichtflüchtigen elektronischen Speicher" wird hier ein Speicher zur dauerhaften Speicherung von Daten verstanden, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein solcher nichtflüchtiger Speicher zeichnet sich dadurch aus, dass die darauf gespeicherten Daten auch nach Abschalten der Energieversorgung erhalten bleiben. Unter einem "flüchtigen elektronischen Speicher" wird hier ein Speicher zur vorübergehenden Speicherung von Daten verstanden, welcher dadurch gekennzeichnet ist, dass alle Daten nach dem Abschalten der Energieversorgung verloren gehen. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier und im Folgenden ein Speicherbereich eines elektronischen Speichers eines elektronischen Geräts verstanden, auf den ein direkter Zugriff über eine Kommunikationsschnittstelle des elektronischen Geräts nicht möglich ist. Auf einen "geschützten Speicherbereich" ist ein Zugriff, das heißt ein Lesezugriff oder ein Schreibzugriff, nur über einen mit dem Speicher gekoppelten Prozessor möglich, wobei ein entsprechender Zugriff nur dann ermöglicht wird, wenn eine hierzu erforderliche Bedingung erfüllt ist. Hierbei kann es sich zum Beispiel um eine kryptographische Bedingung, insbesondere eine erfolgreiche Authentisierung und/oder eine erfolgreiche Berechtigungsprüfung, handeln.

Unter einem "Geschäfts- oder Dienst-Computersystem" wird hier ein Computersystem verstanden, welches über eine Netzwerk-Schnittstelle zur Verbindung mit dem Netzwerk verfügt, sodass mithilfe eines Internetbrowsers oder eines anderen Anwendungsprogramms auf von dem Dienst-Computersystem gespeicherte oder generierte Internetseiten zugegriffen werden kann. Insbesondere kann es sich bei dem Dienst-Computersystem um einen Internetserver zur Zurverfügungstellung einer eCommerce- oder eGovernment-Anwendung handeln, insbesondere einen Onlineshop oder einen Behördenserver. Der Dienst kann auch lediglich in dem Nachladen von Attributen bestehen.

Unter einem "Nutzer-Computersystem" bzw. "Nutzer-Endgerät" wird hier ein Computersystem verstanden, auf welches der Nutzer Zugriff hat. Hierbei kann es sich zum Beispiel um einen Personal Computer (PC), ein Tablet PC oder ein Mobilfunkgerät, insbesondere ein Smartphone, mit einem üblichen Internetbrowser, wie zum Beispiel Microsoft Internet Explorer, Safari, Google Chrome, Firefox oder einem anderen Anwendungsprogramm zum Zugriff auf das Dienst-Computersystem handeln. Das Nutzer-Computersystem hat eine Schnittstelle zur Verbindung mit dem Netzwerk, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einem "Mobilfunkgerät" wird hier und im Folgenden ein tragbares elektronisches Gerät mit einer sogenannten Luftschnittstelle zu einem digitalen zellularen Mobilfunknetzwerk verstanden, welches nach einem Mobilfunkstandard wie zum Beispiel GSM, UMTS, LTE, CDMA oder einem anderen Standard aufgebaut sein kann. Bei dem Mobilfunkgerät kann es sich insbesondere um ein batteriebetriebenes Endgerät, wie zum Beispiel ein sogenanntes Handy, insbesondere ein Smartphone, einen Tablet-, Notebook- oder Laptop-Computer handeln. Insbesondere kann das Mobilfunkgerät ein Betriebssystem wie zum Beispiel Android, Apple iOS oder Windows aufweisen, welches zur Installation von Anwendungsprogrammen, sogenannten Apps, ausgebildet ist.

Ausführungsformen können den Vorteil haben, dass die Gültigkeit eines neu erzeugten Blocks der Blockchain durch das Serverzertifikat garantiert wird. Somit lässt sich für jeden einzelnen Block überprüfen, ob dieser von einem Transaktionsserver erzeugt wurde, der über eine entsprechende Berechtigung verfügt. Durch eine Begrenzung der Anzahl entsprechender Serverzertifikate kann die Anzahl der Transaktionsserver begrenzt werden. Ein Wettbewerb zum Erzeugen neuer Blöcke der Blockchain findet hierbei allenfalls unter der begrenzten Anzahl von Transaktionsservern statt. Aufgrund der begrenzten Anzahl von Teilnehmern wird der Schwierigkeitsgrad des zu lösenden kryptographischen Problems ebenfalls automatisch begrenzt. Somit sinkt der Ressourcenverbrauch für die Erzeugung der Blöcke der Blockchain.

Durch die Begrenzung des Wettbewerbs um die Erzeugung neuer Blöcke in der Blockchain wird zudem ermöglicht, die Computersysteme der Transaktionsserver in einem energieeffizienten Bereich zu betreiben, ohne die Notwendigkeit, diese auf Höchstleistung laufen zulassen, um Wettbewerbsnachteile zu vermeiden. Entsprechende Höchstleistungen sind im Allgemeinen mit einer schlechteren Effizienz verbunden.

Zudem steigt mit zunehmender Anzahl der Transaktionsserver, welche dasselbe kryptographische Problem zu lösen versuchen, auch die Wahrscheinlichkeit, dass mehrere Server parallel oder nacheinander identische Lösungsansätze versuchen. Durch die Begrenzung der an der Erzeugung gültiger Blöcke teilnehmender Transaktionsserver wird somit auch der Umfang erfolgloser Lösungsversuche reduziert. Dies trägt zusätzlich zu einer Verringerung des Rechenaufwands zum Auffinden einer korrekten Lösung für das kryptographische Problem bei.

Demgegenüber ist das Bitcoin-System darauf ausgelegt, dass eine möglichst große Anzahl an Teilnehmern möglichst viel Rechenleistung für das Auffinden neuer Blöcke einsetzt, was es erlaubt, den Schwierigkeitsgrad für das zu lösende kryptographische Problem so hoch wie möglich anzusetzen und gleichzeitig Lösungen in zeitlich konstanten Abständen zu finden. Der enorme Rechenaufwand steigert die Sicherheit des Systems, da ein enormer Rechenaufwand und damit enorme Ressourcen notwendig werden, um erzeugte Blöcke durch andere Blöcke zu ersetzen, um so die Blockchain zu manipulieren. Das Bitcoin-System ist somit explizit auf einen möglichst hohen Ressourcenverbrauch ausgelegt.

Ausführungsformen gemäß dem vorliegenden Vorschlag zielen demgegenüber in erster Linie auf die Verwendung von Zertifikaten ab. Zusätzlich kann die Sicherheit durch Lösen eines kryptographischen Problems, welches dem Bitcoin-System entspricht, gesteigert werden. Die Verschwendung von Ressourcen kann durch Begrenzung der Anzahl der Zertifikate effektiv begrenzt werden, da der Ressourcenaufwand in erster Linie von der Anzahl der Teilnehmer abhängt nicht vom Umfang der Transaktionen. Mit zunehmender Länge der Blockchain steigt dadurch zusätzlich zu den Zertifikaten die Sicherheit, da eine Änderung eines älteren Blocks der Blockchain nicht nur eine Änderung des entsprechenden Blocks, sondern auch aller nachfolgenden Blöcke notwendig machten. Mithin muss der Rechenaufwand zur Lösung aller entsprechenden kryptographischer Probleme für eine solche Manipulation eingesetzt werden.

Nach Ausführungsformen weist das Transaktionsprogramm zum Nachweis seiner Authentizität eine Signatur auf, wobei ein Transaktionsprogramm-Zertifikat der hierarchischen PKI zum Nachweis der Authentizität der Signatur des Transaktionsprogramm bereitgestellt wird, wobei der Transaktionsserver ein erstes Sicherheitsmodul aufweist, welches gegen Manipulationen gesichert ist, wobei das erste Sicherheitsmodul dazu konfiguriert ist:
- einen Hashwert des Transaktionsprogramms zu berechnen,
- die Korrektheit des berechneten Hashwerts durch Abgleich mit der Signatur des Transaktionsprogramms unter Verwendung des Transaktionsprogramm-Zertifikats zu prüfen, und
- im Falle einer Abweichung des berechneten Hashwerts von dem der Signatur des Transaktionsprogramms zugrundeliegenden Hashwerts, die Erzeugung von gültigen Blöcken der Blockchain durch den Transaktionsserver zu blockieren.

Bei dem Sicherheitsmodul kann es sich beispielsweise um einen geschützten Mikrocontroller handeln, d.h. einen Mikrocontroller mit physikalisch beschränkten Zugriffsmöglichkeiten. Zudem mag ein geschützter Mikrocontroller zusätzliche Maßnahmen gegen Missbrauch aufweisen, insbesondere gegen unberechtigte Zugriffe auf Daten im Speicher des Mikrocontrollers. Beispielsweise umfasst ein geschützter Mikrocontroller Sensoren zur Überwachung des Zustands des Mikrocontrollers sowie von dessen Umgebung, um Abweichungen vom Normalbetrieb zu erkennen, welche auf Manipulationsversuche hinweisen können. Entsprechende Sensortypen umfassen beispielweise einen Taktfrequenzsensor, einen Temperatursensor, einen Spannungssensor, und/oder einen Lichtsensor. Taktfrequenzsensoren, Temperatursensoren und Spannungssensoren erfassen beispielweise Abweichungen der Taktfrequenz, Temperatur und/oder Spannung nach oben oder unten von einem vordefinierten Normalbereich. Zudem kann ein geschützter Mikrocontroller einen nichtflüchtigen elektronischen Speicher mit einem geschützten Speicherbereich umfassen.

Des Weiteren kann ein geschützter Mikrocontroller Mittel zur kryptographischen Datensicherung umfassen, insbesondere in dem geschützten Speicherbereich, wie beispielsweise einen Zufallszahlengenerator, einen Generator für kryptographische Schlüssel, einen Hashgenerator, ein Ver-/Entschlüsselungsmodul, ein Signaturmodul, Zertifikate, und/oder einen oder mehrere nicht migrierbare kryptographische Schlüssel, wie beispielsweise einen sogenannten Endorsement Key, Storage Root Key und/oder Attestation Identity Keys.

Bei dem Sicherheitsmodul kann es sich beispielsweise um ein Trusted Platform Module (TPM) nach TCG-Spezifikation handeln. Das TPM ist einem lokalen Computer, beispielsweise ein PC, Notebook, Tablet PC, PDA oder Smartphone, zugeordnet. Ein Computer mit TPM, speziell angepasstem Betriebssystem und entsprechender Software bildet zusammen eine vertrauenswürdige Plattform (Trusted Computing Plattform, TC-Plattform). Durch das Festlegen entsprechender Beschränkungen kann sichergestellt werden, dass eine solche vertrauenswürdige Plattform nicht mehr entgegen den Vorgaben des Herstellers genutzt werden kann.

Insbesondere kann das Sicherheitsmodul dazu konfiguriert sein, ein anderes Computersystem davon zu überzeugen, dass der zugeordnete Computer bestimmte Fähigkeiten besitzt und sich in einem wohldefinierten Zustand, beispielsweise auf Basis entsprechender PCR-Werte eines Platform Configuration Register, befindet. Eine entsprechende Bescheinigung kann beispielsweise mittels Privacy CA (Trusted Third Party) oder Direct Anonymous Attestation erfolgen.

Ausführungsformen können den Vorteil haben, dass nur zertifizierte Transaktionsprogramme zum Einsatz kommen. Nicht authentische Transaktionsprogramme, beispielsweise manipulierte Transaktionsprogramme oder veraltete Versionen von Transaktionsprogrammen, werden durch das Sicherheitsmodul daran gehindert, verwendet zu werden. Bei Verwendung eines veralteten Transaktionsprogramms kann beispielsweise durch ein Sperren des entsprechenden Transaktionsprogramm-Zertifikats effizient verhindert werden. Damit kann insbesondere erreicht werden, dass nur aktuelle Transaktionsprogramme verwendet werden, welche beispielsweise ein höheres Maß an Sicherheit aufweisen, dadurch, dass beispielsweise Sicherheitslücken geschlossen und/oder verbesserte kryptographische Verfahren verwendet werden.

Nach Ausführungsformen ist das erste Sicherheitsmodul dazu konfiguriert im Falle einer Abweichung des berechneten Hashwerts von dem der Signatur des Transaktionsprogramms zugrundeliegenden Hashwerts, einen Verbindungsaufbau zu den Clients zu blockieren.

Ausführungsformen können den Vorteil haben, dass die Verwendung eines ungültigen Transaktionsprogramms effizient verhindert wird. Zudem wird verhindert, dass der Client dahingehend getäuscht werden kann, dass er mit einem zulässigen Transaktionsserver kommuniziert.

Nach Ausführungsformen weisen die Walletprogramme zum Nachweis ihrer Authentizität jeweils eine Signatur auf, wobei für jedes Walletprogramm ein Walletprogramm-Zertifikat der hierarchischen PKI zum Nachweis der Authentizität der Signatur des jeweiligen Walletprogramms bereitgestellt wird, und wobei der Client des jeweiligen Walletprogramms ein zweites Sicherheitsmodul aufweist, welches gegen Manipulationen gesichert ist, wobei das zweite Sicherheitsmodul dazu konfiguriert ist:
- einen Hashwert des Walletprogramms zu berechnen,
- die Korrektheit des berechneten Hashwerts durch Abgleich mit der Signatur des Walletprogramms unter Verwendung des Walletprogramm-Zertifikats zu prüfen,
- im Falle einer Abweichung des berechneten Hashwerts von dem der Signatur des Walletprogramms zugrundeliegenden Hashwerts, die Erzeugung von gültigen Transaktionsnachrichten durch den jeweiligen Client zu blockieren.

Ausführungsformen können den Vorteil haben, dass nur zertifizierte Walletprogramme zum Einsatz kommen. Nicht authentische Walletprogramme, beispielsweise manipulierte Walletprogramme oder veraltete Versionen von Walletprogrammen, werden durch das zweite Sicherheitsmodul daran gehindert, verwendet zu werden. Bei Verwendung eines veralteten Walletprogramms kann beispielsweise durch ein Sperren des entsprechenden Walletprogramm-Zertifikats effizient verhindert werden. Damit kann insbesondere erreicht werden, dass nur aktuelle Walletprogramme verwendet werden, welche beispielsweise ein höheres Maß an Sicherheit aufweisen, dadurch, dass beispielsweise Sicherheitslücken geschlossen und/oder verbesserte kryptographische Verfahren verwendet werden.

Nach Ausführungsformen ist das zweite Sicherheitsmodul dazu konfiguriert im Falle einer Abweichung des berechneten Hashwerts von dem der Signatur des Clientprogramms zugrundeliegenden Hashwerts, einen Verbindungsaufbau zu dem Transaktionsserver zu blockieren.

Ausführungsformen können den Vorteil haben, dass die Verwendung eines ungültigen Walletprogramms effizient verhindert wird. Zudem wird verhindert, dass der Transaktionsserver dahingehend getäuscht werden kann, dass er mit einem zulässigen Wallet kommuniziert.

Nach Ausführungsformen umfasst das erste Sicherheitsmodul einen ersten privaten und einen ersten öffentlichen Sicherheitsmodulschlüssel eines ersten asymmetrischen Sicherheitsmodulschlüsselpaars, wobei das erste Sicherheitsmodul ein erstes Sicherheitsmodul-Zertifikat der hierarchischen PKI umfasst, welches dazu konfiguriert ist als Nachweis der Authentizität des ersten öffentlichen Sicherheitsmodulschlüssels zu dienen, und wobei das erste Sicherheitsmodul dazu konfiguriert ist bei der Herstellung einer Verbindung zu einem der Walletprogramme den Hashwert des Transaktionsprogramms zur Authentifizierung gegenüber dem Walletprogramme durch eine Signatur mit dem ersten privaten Sicherheitsmodulschlüssel zu bestätigen.

Ausführungsformen können den Vorteil haben, dass durch die Signatur des ersten Sicherheitsmoduls auf effiziente Weise nachgewiesen wird, dass das verwendete Transaktionsprogramm gültig und insbesondere nicht manipuliert ist. Dies kann durch das Walletprogramm anhand eines öffentlichen Sicherheitsmodulschlüssels überprüft werden. Somit kann das Walletprogramm bei der Herstellung einer Verbindung zum Transaktionsprogramm sicher sein, dass dieses gültig ist.

Nach Ausführungsformen umfassen die zweiten Sicherheitsmodule jeweils einen zweiten privaten und einen zweiten öffentlichen Sicherheitsmodulschlüssel eines zweiten asymmetrischen Sicherheitsmodulschlüsselpaars, wobei das zweite Sicherheitsmodul ein zweites Sicherheitsmodul-Zertifikat der hierarchischen PKI umfasst, welches dazu konfiguriert ist als Nachweis der Authentizität des zweiten öffentlichen Sicherheitsmodulschlüssels zu dienen, und wobei das zweite Sicherheitsmodul dazu konfiguriert ist bei der Herstellung einer Verbindung zu dem Transaktionsprogramm den Hashwert des Walletprogramms zur Authentifizierung gegenüber dem Transaktionsprogramm durch eine Signatur mit dem zweiten privaten Sicherheitsmodulschlüssel zu bestätigen.

Ausführungsformen können den Vorteil haben, dass durch die Signatur des zweiten Sicherheitsmoduls auf effiziente Weise nachgewiesen wird, dass das verwendete Walletprogramm gültig und insbesondere nicht manipuliert ist. Dies kann durch das Transaktionsprogramm anhand des zweiten öffentlichen Sicherheitsmodulschlüssels überprüft werden. Somit kann das Transaktionsprogramm bei der Herstellung einer Verbindung zum Walletprogramm sicher sein, dass dieses gültig ist.

Nach Ausführungsformen ist das erste Sicherheitsmodul dazu konfiguriert:
- die Korrektheit des signierten Hashwerts des Walletprogramms durch Abgleich mit der Signatur des Walletprogramms unter Verwendung des Walletprogramm-Zertifikats zu prüfen,
- im Falle einer Abweichung von der Signatur des Walletprogramms, den Verbindungsaufbau zu dem jeweiligen Client abzubrechen,
und das wobei das zweite Sicherheitsmodul dazu konfiguriert ist:
- die Korrektheit des signierten Hashwerts des Transaktionsprogramms durch Abgleich mit der Signatur des Transaktionsprogramms unter Verwendung des Transaktionsprogramm-Zertifikats zu prüfen,
- im Falle einer Abweichung von der Signatur des Transaktionsprogramms, den Verbindungsaufbau zu dem jeweiligen Client abzubrechen.

Ausführungsformen können den Vorteil haben, dass die Gültigkeit des Walletprogramms und des Transaktionsprogramms durch das erste Sicherheitsmodul bzw. das zweite Sicherheitsmodul effizient geprüft werden kann.

Nach Ausführungsformen wird genau ein Transaktionsserver bereitgestellt.

Ausführungsformen können den Vorteil haben, dass die Schwierigkeit des zu lösenden kryptographischen Problems auf ein Minimum reduziert werden kann und somit die aufzuwendenden Ressourcen minimiert werden können. Zudem kann dadurch ausgeschlossen werden, dass mehrere Transaktionsserver denselben erfolglosen Lösungsansatz zum Lösen des kryptographischen Problems versuchen und somit Ressourcen verschwendet werden.

Nach Ausführungsformen ist die maximale Anzahl der bereitgestellten Transaktionsserver festgelegt.

Die Verwendung einer Mehrzahl von Transaktionsservern kann insbesondere den Vorteil haben, dass die Ausfallsicherheit des Gesamtsystems erhöht wird.

Ausführungsformen können den Vorteil haben, dass durch die Begrenzung der maximalen Anzahl bereitgestellter Transaktionsserver die eingesetzten Ressourcen effizient begrenzt werden. Dabei wird allerdings mit zunehmender Anzahl an Transaktionsserver die Wahrscheinlichkeit zunehmen, dass identische Fehlversuche zur Lösung des kryptographischen Problems unternommen werden. Nach Ausführungsformen kann die Wahl der Lösungsansätze aller Transaktionsserver aufeinander abgestimmt sein, um Ressourcenverschwendung durch mehrfache identische Fehlversuche zu vermeiden.

Nach Ausführungsformen kann der Wettbewerb zwischen den Transaktionsserver zusätzlich dadurch reduziert werden, dass die Clients wählen können, welcher der Transaktionsserver die Transaktionsnachricht verarbeiten soll. Dies kann beispielsweise dadurch erfolgen, dass die Transaktionsnachricht an einen bestimmten Transaktionsserver gesendet wird.

Nach Ausführungsformen erfolgt die Zuteilung der Transaktionsnachrichten zu den einzelnen Transaktionsservern gemäß einem festgelegten Schema. Hierbei können die einzelnen Transaktionsnachrichten beispielsweise jeweils an alle Transaktions-server oder einen bestimmten Transaktionsserver übermittelt werden. Eine Übermittlung an alle Transaktionsserver oder zumindest eine Mehrzahl von Transaktionsservern kann den Vorteil haben, dass Ausfallrisiken, insbesondere durch DoS-Attacken, gesenkt werden. Im Falle, dass die Transaktionsnachrichten jeweils an einen bestimmten Transaktionsserver übermittelt werden, kann diese Zuteilung festgelegt sein oder aber dynamisch erfolgen. Im letzteren Fall verteilen die Transaktionsserver, die Transaktionsnachrichten beispielsweise nach Erhalt untereinander, wobei sie eine empfangene Transaktionsnachricht entweder selbst bearbeiten oder an einen anderen Transaktionsserver weiterleiten.

Nach Ausführungsformen ist die maximale Anzahl der bereitgestellten Transaktionsserver festgelegt in Abhängigkeit von der durchschnittlichen Anzahl an Transaktionsnachrichten über einen vordefinierten Zeitraum.

Ausführungsformen können den Vorteil haben, dass die Anzahl der gestellten Transaktionsserver und damit der eingesetzten Ressourcen direkt mit der Anzahl der zu verarbeitenden Transaktionsnachrichten korreliert. Dadurch kann einerseits eine Verschwendung von Ressourcen verhindert werden, andererseits kann sichergestellt werden, dass eine ausreichende Anzahl an Servern und damit Rechenleistung bereitsteht, um die Transaktionsnachrichten effizient und effektiv zu verarbeiten.

Nach Ausführungsformen wird die Anzahl der bereitgestellten Transaktionsserver durch die bereitgestellten Serverzertifikate begrenzt, wobei pro Transaktionsserver ein Serverzertifikat bereitgestellt wird.

Nach Ausführungsformen ist die maximale Anzahl an Transaktionen pro erzeugtem Block festgelegt.

Ausführungsformen können den Vorteil haben, dass die Anzahl der bereitgestellten Transaktionsserver und damit der aufgewandten Ressourcen, wenn diese von der Anzahl der Transaktionsnachrichten abhängen, mit der Anzahl an Transaktionen korrelieren. Somit können Ressourcen im Gegensatz zum Bitcoin-System an den Umfang des getätigten Zahlungsverkehrs gekoppelt werden.

Nach Ausführungsformen muss der erzeugte Block ein vordefiniertes Merkmal erfüllen, um gültig zu sein, und durch Wahl des entsprechenden Merkmals wird der Schwierigkeitsgrad für die Erzeugung eines gültigen Blocks gesteuert.

Ausführungsformen können den Vorteil haben, dass durch Wahl des vordefinierten Merkmals der Schwierigkeitsgrad in Form eines gültigen Blocks und damit die Ressourcen zum Erzeugen des entsprechenden Blocks gesteuert werden können. Damit kann insbesondere eine Verschwendung von Ressourcen entgegengesteuert werden und gleichzeitig erreicht werden, dass die Sicherheit der resultierenden Blockchain durch Wahl eines ausreichenden Mindestschwierigkeitsgrads zur Erzeugung einzelner Blöcke auf einem hinreichenden Niveau gehalten wird.

Nach Ausführungsformen wird der Schwierigkeitsgrad so gesteuert, dass von der aktuell bereitgestellten Anzahl an Transaktionsservern eine festgelegte durchschnittliche Anzahl an Blöcken über einen vordefinierten Zeitraum erzeugbar ist.

Ausführungsformen können den Vorteil haben, dass die Anzahl an erzeugten Blöcken auf einem ausreichenden konstanten Niveau gehalten werden kann. Dies ist insbesondere auch im Falle einer geringen Anzahl an Transaktionsservern möglich, was zugleich den Vorteil eines geringen Ressourcenverbrauchs hat. Eine damit möglicherweise einhergehende Verringerung des Schwierigkeitsgrads und damit der zusätzlichen Absicherung der Blockchain wird durch die Verwendung der Serverzertifikate kompensiert. Die entsprechenden Serverzertifikate stellen eine Grundsicherheit des Systems sicher, welche unabhängig vom Schwierigkeitsgrad der Erzeugung einzelner Blöcke ist.

Nach Ausführungsformen weist der erzeugte Block einen transaktionsunabhängigen Parameter auf, welcher zur Erzeugung eines gültigen Blocks solange variiert wird bis das vordefinierte Merkmal erfüllt ist

Ausführungsformen können den Vorteil haben, dass sie die Möglichkeit zur Implementierung eines steuerbaren Schwierigkeitsgrads bereitstellen. Bei dem transaktionsunabhängigen Parameter kann es sich beispielsweise um ein Nonce handeln, d.h. ein numerischer wert, welcher sonst keine Bedeutung hat, durch dessen Variation Ausschließlich die Anpassungen des erzeugten Blocks effizient und einfach parametrisiert werden können.

Nach Ausführungsformen besteht das vordefinierte Merkmal darin, dass ein Hash-Wert des erzeugten Blocks kleiner als oder gleich einem vorgegebenen Grenzwert ist und der Schwierigkeitsgrad durch die Wahl des Grenzwerts gesteuert wird.

Ausführungsformen können den Vorteil haben, dass sie eine effiziente Umsetzung eines steuerbaren Schwierigkeitsgrads für die Erzeugung eines gültigen Blocks bereitstellen. Der entsprechende Hashwert ist deterministisch, d.h. beim Einsetzen derselben Ausgangsparameter erhält man stets denselben Hashwert. Andererseits ist das Ergebnis der Hashwertbildung nicht vorsehbar, weshalb sichergestellt werden kann, dass das entsprechende Problem nur durch Ausprobieren gelöst werden kann. Die Ergebnisse der Hashwertbildung sind dabei gleich verteilt, womit statistisch vorhergesagt werden kann, mit welcher Wahrscheinlichkeit ein bestimmter Hashwert gefunden wird. Insbesondere kann vorhergesagt werden, wie lange bzw. wie viele Versuche es im statistischen Mittel zum Auffinden einer gültigen Lösung notwendig sind. Somit lässt sich ein Schwierigkeitsgrad für das zu lösende kryptographische Problem definieren.

Bei dem Hash-Wert kann es sich insbesondere um einen Hash des Blockheaders handeln, welcher beispielsweise den Root-Hash des vorhergehenden Blocks, eine Angabe der Schwierigkeit, einen Zweitstempel, ein Nonce und den Root-Hash des entsprechenden Blocks umfasst.

Bei dem vordefinierten Merkmal handelt es sich beispielsweise um das Kriterium, das der Hashwert des Headers des Blocks kleiner gleich einem Grenzwert ist. Der resultierende Hash-Wert ist nicht vorhersagbar, vielmehr handelt es sich um eine zufallsverteilte Zahl. Die Hashwertberechnung kann beispielsweise mit dem Secure Hash Algorithm (SHA) SHA 256 erfolgen. Der resultierende Hash-Wert ist in diesem Fall eine Zufallszahl zwischen 0 und 2²⁵⁶-1. Die Wahrscheinlichkeit, dass beim Anwenden des Hashalgorithmus einen bestimmten Hash herauskommt, ist somit (maximaler Hash-Wert+1)⁻¹, im Falle des SHA 256-Algorithums also 2⁻²⁵⁶. Die Wahrscheinlichkeit, dass der resultierende Hash-Wert kleiner gleich einem Grenzwert bzw. Zielwert (engl. target) ist, beträgt daher (target)/(max. Hash-Wert). Für einen beispielhaften maximalen Grenzwert von (2¹⁶-1)·2²⁰⁸ beträgt die Wahrscheinlichkeit [(2¹⁶-1)·2²⁰⁸]/2²⁵⁶ ≈ 2⁻³². Die Schwierigkeit S einen Hash-Wert zu erhalten, welcher kleiner gleich einem gewählten Grenzwert bzw. target ist, kann in Abhängigkeit eines maximalen Grenzwerts bzw. max. target wie folgt angegeben werden: S = (max. target)/target. Mithin ist die Wahrscheinlichkeit einen Hash-Wert zu erhalten, welcher kleiner gleich dem gewählten Grenzwert ist, für das zuvor gegebene Beispiel: 2⁻³²/S. Als Beispiel sei ein Computersystem mit einer bestimmten Hashrate betrachtet, welches im Durchschnitt alle x·Sek. einen Hash-Wert findet, welcher kleiner gleich dem gewählten Grenzwert ist. Soll das Computersystem anstelle aller x·Sek. im Durchschnitt alle y·Sek. einen Treffer erzielen, so kann die Schwierigkeit entsprechend angepasst werden: S_{y}=(x/y)·S. Entsprechende Anpassungen der Schwierigkeit können auch dazu verwendet werden die Trefferrate bei Veränderungen des Computersystems, z.B. Veränderungen der Rechenleistung durch Erhöhen oder Verringern der Anzahl an Transaktionsservern, konstant zu halten. Wird die Schwierigkeit so angepasst, dass alle y·Sek. ein Treffer erzielt wird, kann die Hashrate R des Computersystems wie folgt parametrisiert werden: R = (2³²·S)/(y·Sek.).

Nach Ausführungsformen wird das Serverzertifikat als Teil des erzeugten Blocks bereitgestellt.

Ausführungsformen können den Vorteil haben, dass die Gültigkeit eines erzeugten Blocks direkt anhand der Blockchain geprüft werden kann. Insbesondere kann somit verhindert werden, dass durch Manipulationen des Serverzertifikats selbst bzw. der Verteilung des Serverzertifikats die Sicherheit des Systems beeinträchtigt werden kann.

Nach Ausführungsformen ist eine Währungserzeugungsinstanz vorgesehen, auf welcher ein Währungserzeugungsprogramm zur Erzeugung neuer Beträgen der Kryptowährung vorgesehen ist. Das Währungserzeugungsprogramm ist dazu konfiguriert Blöcke der Blockchain zu erzeugen, welche eine Währungserzeugungstransaktion umfassen. Die Währungserzeugungsinstanz umfasst einen privaten und einen öffentlichen Währungserzeugungsschlüssel eines asymmetrischen Währungserzeugungsschlüsselpaars und ein Währungserzeugungszertifikat der hierarchischen PKI, welches dazu konfiguriert ist als Nachweis der Authentizität des öffentlichen Währungserzeugungsschlüssels und der Berechtigung der Währungserzeugungsinstanz zum Erzeugen von Blöcken der Blockchain mit Währungserzeugungstransaktionen zu dienen. Das Verfahren umfasst ferner:
- Erzeugen eines Blocks für die Blockchain durch die Währungserzeugungsinstanz, welcher eine Währungserzeugungstransaktion umfasst,
- Signieren des Blocks mit dem geheimen Währungserzeugungsschlüssel,
- Bereitstellen des Währungserzeugungszertifikats für die Client-Nodes zum Überprüfen der Gültigkeit des erzeugten Blocks der Blockchain.

Ausführungsformen können den Vorteil haben, dass die Erzeugung von Beträgen der Kryptowährung zentral gesteuert werden kann. Die Erzeugungsinstanz agiert im Wesentlichen analog zu den Transaktionsservern, wobei die Währungserzeugungsinstanz nur Blöcke der Blockchain erzeugen kann, welche Währungserzeugungstransaktionen umfassen. Durch die Zentralisierung der Währungserzeugung können zum einen aufgewendete Ressourcen zur Erzeugung von Währungsbeträgen in gleicher Weise begrenzt werden wie die Ressourcen, welche für die Erzeugung von Transaktionen verwendet werden.

Zum anderen kann die in Umlauf befindliche Menge an Kryptowährung gesteuert werden. Ausführungsformen können den Vorteil haben, dass die Währungserzeugungsinstanz das Erzeugen von Kryptowährung so steuern kann, dass der Wert der Kryptowährung an eine bestehende konventionelle nationale oder internationale Währung angepasst wird. Beispielsweise können Beträge der Kryptowährung nur im Austausch mit Beträgen der entsprechenden konventionellen Währung zu einem festgesetzten Wechselkurs erzeugt werden. Ausführungsformen können den Vorteil haben, dass durch die Anbindung an eine bestehende Währung Wechselkursschwankungen, wie sie bei der Bitcoin-Währung in der Vergangenheit zu beobachten waren, unterbunden werden können. Somit kann insbesondere verhindert werden, dass beim Abwickeln einer geltenden Transaktion der Kryptowährung wirtschaftliche Nachteile durch Währungsschwankungen, d.h. von dem Senden der Transaktionsnachricht bis hin zum Generieren des gültigen Blocks der Blockchain, entstehen. Nach Ausführungsformen kann die Währungserzeugungsinstanz einer Zentralbank zugeordnet sein.

Nach Ausführungsformen erzeugt die Währungserzeugungsinstanz den Block mit der Währungserzeugungstransaktion auf Anfrage des Clients hin, wobei das Verfahren vor Erzeugung des entsprechenden Blocks der Blockchain umfasst:
- Empfangen einer Währungserzeugungsnachricht von einem der Client-Nodes, wobei die Währungserzeugungsnachricht den zu erzeugenden Betrag der Kryptowährung sowie eine Zieladresse für den zu erzeugenden Betrag angibt,
- Prüfen der Gültigkeit der Währungserzeugungsnachricht durch die Währungserzeugungsinstanz.

Ausführungsformen können den Vorteil haben, dass der Client die Möglichkeit besitzt sich über das Kyptowährungssystem neue Kryptowährung zu beschaffen. Nach Ausführungsformen wird ein entsprechender neuer Betrag von Kryptowährung nur unter einer bestimmten Voraussetzung erzeugt. Diese Voraussetzung kann beispielsweise darin bestehen, dass ein gemäß einem bestimmten Wechselkurs festgelegter Betrag in einer anderen Währung auf einem dazu vorgesehenen Konto hinterlegt wird. Nach Ausführungsformen kann der entsprechende Client-Node beispielsweise einer Bank zugeordnet sein. Nach Ausführungsformen kann der entsprechende Client-Node einem beliebigen Nutzer zugeordnet sein.

Nach Ausführungsformen handelt es sich bei der Währungserzeugungstransaktion um eine Transaktion des zu erzeugenden Betrags der Kryptowährung auf die Zieladresse ohne Angabe einer Ausgangsadresse.

Ausführungsformen können den Vorteil haben, dass die entsprechenden Währungserzeugungstransaktionen kompakt formuliert werden können.

Nach Ausführungsformen handelt es sich bei der Währungserzeugungstransaktion um eine Transaktion des zu erzeugenden Betrags der Kryptowährung von einer der Währungserzeugungsinstanz zugeordnete Ausgangsadresse auf die Zieladresse.

Ausführungsformen können den Vorteil haben, dass die Sicherheit des Systems dadurch erhöht wird, dass die Währungserzeugungsinstanz zur Erzeugung einer Währungserzeugungstransaktion den Besitz und/oder die Kenntnis eines der Ausgangsadresse zugeordneten kryptographischen Schlüssels nachweist. Dies kann beispielsweise in analoger Weise zu den durch die Walletprogramme in Auftrag gegebenen Transaktionen erfolgen.

Nach Ausführungsformen weist das Währungserzeugungsprogramm zum Nachweis seiner Authentizität eine Signatur auf, wobei ein Währungserzeugungsprogramm-Zertifikat der hierarchischen PKI zum Nachweis der Authentizität der Signatur des Währungserzeugungsprogramm bereitgestellt wird, wobei die Währungserzeugungsinstanz ein drittes Sicherheitsmodul aufweist, welches gegen Manipulationen gesichert, und wobei das dritte Sicherheitsmodul dazu konfiguriert ist:
- einen Hashwert des Währungserzeugungsprogramms zu berechnen,
- die Korrektheit des berechneten Hashwerts durch Abgleich mit der Signatur des Währungserzeugungsprogramms unter Verwendung des Währungserzeugungsprogramm-Zertifikats zu prüfen,
- im Falle einer Abweichung des berechneten Hashwerts von dem der Signatur des Währungserzeugungsprogramms zugrundeliegenden Hashwerts, die Erzeugung von Blöcken der Blockchain durch die Währungserzeugungsinstanz zu blockieren.

Ausführungsformen können den Vorteil haben, dass nur zertifizierte Währungserzeugungsprogramme zum Einsatz kommen. Nicht authentische Währungserzeugungsprogramme, beispielsweise manipulierte Währungserzeugungsprogramme oder veraltete Versionen von Währungserzeugungsprogrammen, werden durch das Sicherheitsmodul daran gehindert, verwendet zu werden. Bei Verwendung eines veralteten Währungserzeugungsprogramms kann beispielsweise durch ein Sperren des entsprechenden Währungserzeugungszertifikats effizient verhindert werden. Damit kann insbesondere erreicht werden, dass nur aktuelle Währungserzeugungsprogramme verwendet werden, welche beispielsweise ein höheres Maß an Sicherheit aufweisen, dadurch, dass beispielsweise Sicherheitslücken geschlossen und/oder verbesserte kryptographische Verfahren verwendet werden.

Nach Ausführungsformen umfasst das dritte Sicherheitsmodul einen dritten privaten und einen dritten öffentlichen Sicherheitsmodulschlüssel eines dritten asymmetrischen Sicherheitsmodulschlüsselpaars, wobei das dritte Sicherheitsmodul ein drittes Sicherheitsmodul-Zertifikat der hierarchischen PKI umfasst, welches dazu konfiguriert ist als Nachweis der Authentizität des dritten öffentlichen Sicherheitsmodulschlüssels zu dienen, wobei das dritte Sicherheitsmodul dazu konfiguriert ist, bei der Herstellung einer Verbindung zu einem der Walletprogramm den Hashwert des Währungserzeugungsprogramms zur Authentifizierung gegenüber dem Walletprogramm durch eine Signatur mit dem dritten privaten Sicherheitsmodulschlüssel zu bestätigen, und
wobei die zweiten Sicherheitsmodule dazu konfiguriert sind:
- die Korrektheit des signierten Hashwerts des Währungserzeugungsprogramms durch Abgleich mit der Signatur des Währungserzeugungsprogramms unter Verwendung des Währungserzeugungsprogramm-Zertifikats zu prüfen,
- im Falle einer Abweichung von der Signatur des Währungserzeugungsprogramms, den Verbindungsaufbau zu der Währungserzeugungsinstanz abzubrechen.

Ausführungsformen können den Vorteil haben, dass die Gültigkeit des Währungserzeugungsprogramms durch das zweite Sicherheitsmodul effizient geprüft werden kann.

Nach Ausführungsformen muss der erzeugte Block mit der Währungserzeugungstransaktion ein vordefiniertes Merkmal erfüllen, um gültig zu sein, und durch Wahl des entsprechenden Merkmals wird der Schwierigkeitsgrad für die Erzeugung eines gültigen Blocks mit der Währungserzeugungstransaktion gesteuert. Nach Ausführungsformen wird der Schwierigkeitsgrad für die Erzeugung eines gültigen Blocks mit der Währungserzeugungstransaktion so gesteuert, dass der entsprechende Schwierigkeitsgrad höher ist als der Schwierigkeitsgrad zur Erzeugung eines gültigen Blocks mit einer Transaktionsnachricht.

Ausführungsformen können den Vorteil haben, dass durch Wahl des vordefinierten Merkmals der Schwierigkeitsgrad in Form eines gültigen Blocks und damit die Ressourcen zum Erzeugen des entsprechenden Blocks gesteuert werden können. Damit kann insbesondere eine Verschwendung von Ressourcen entgegengesteuert werden und gleichzeitig erreicht werden, dass die Sicherheit der resultierenden Blockchain durch Wahl eines ausreichenden Mindestschwierigkeitsgrads zur Erzeugung einzelner Blöcke auf einem hinreichenden Niveau gehalten wird. Ausführungsformen können ferner den Vorteil haben, dass durch einen höheren Schwierigkeitsgrad, die Sicherheit beim Erzeugen neuer Währungsbeträge zusätzlich erhöht wird.

Nach Ausführungsformen wird das Währungserzeugungszertifikat als Teil des erzeugten Blocks mit der Währungserzeugungstransaktion bereitgestellt.

Ausführungsformen können den Vorteil haben, dass die Gültigkeit eines erzeugten Blocks direkt geprüft werden kann anhand der Blockchain. Insbesondere kann somit verhindert werden, dass über Manipulationen des Währungserzeugungszertifikats selbst bzw. der Verteilung des Währungserzeugungszertifikats die Sicherheit des Systems beeinträchtigt werden kann.

Nach Ausführungsformen wird die Währungserzeugungsinstanz von dem Transaktionsserver und das Währungserzeugungsprogramm von dem Transaktionsprogramm umfasst.

Ausführungsformen können den Vorteil haben, dass Transaktionsserver zugleich die Aufgabe einer Transaktionserzeugungsinstanz übernehmen können. Dies kann den Vorteil haben, dass das gesamte System kompakt ausgestaltet werden kann.

Nach Ausführungsformen handelt es sich bei dem Sicherheitsmodul der Clients und des Transaktionsservers jeweils um ein Trusted Platform Module gemäß ISO/IEC 11889:2015.

Ausführungsformen können den Vorteil haben, dass sie ein effizientes Sicherheitsmodul bereitstellen.

Nach Ausführungsformen verwendet der erste Transaktionsserver den privaten Serverschlüssel zum Signieren von Nachrichten, insbesondere von Nachrichten an die Wallets.

Ausführungsformen können den Vorteil haben, dass die Authentizität entsprechender Nachrichten in effizienter Weise sichergestellt werden kann.

Nach Ausführungsformen erfolgt eine Sicherung des Transports von Nachrichten zwischen den Transaktionsservern und den Client-Nodes mittels Transport Layer Security (TLS, deutsch Transportschichtsicherheit) auf Basis des privaten Serverschlüssels und des privaten Wallet-Schlüssels.

Gemäß dem TLS-Protokoll, einem hybriden Verschlüsselungsprotokoll zur sicheren Datenübertragung im Internet, baut ein Client eine Verbindung zu einem Server auf. Der Server authentisiert sich gegenüber dem Client mit einem Zertifikat, beispielweise ein X.509-Zertifikat. Der Client überprüft die Vertrauenswürdigkeit des Zertifikats und ob der Servername mit dem Zertifikat übereinstimmt. Optional kann sich zudem der Client mit einem eigenen Zertifikat gegenüber dem Server authentisieren. Anschließend schickt entweder der Client dem Server eine mit dem öffentlichen Schlüssel des Servers verschlüsselte geheime Zufallszahl, oder die beiden Parteien berechnen mit dem Diffie-Hellman-Schlüsselaustausch ein gemeinsames Geheimnis. Aus dem Geheimnis wird ein kryptographischer Schlüssel abgeleitet. Dieser Schlüssel kann in der Folge benutzt werden, um alle Nachrichten der Verbindung mit einem symmetrischen Verschlüsselungsverfahren zu verschlüsseln und zum Schutz von Nachrichten-Integrität und Authentizität durch einen Message Authentication Code abzusichern.

Nach Ausführungsformen können dadurch Man-in-the-Middle-Angriffe verhindert und die Wirkung eines DoS-Angriffs auf Transaktionsserver reduziert werden, da nicht autorisierte Nachrichten bereits auf unteren OSI-Schichten verworfen werden können.

Nach Ausführungsformen umfasst der erste Client einen privaten und einen öffentlichen Clientschlüssel eines asymmetrischen Clientschlüsselpaars, und wobei der Client ein Clientzertifikat der hierarchischen PKI umfasst, welches dazu konfiguriert ist als Nachweis der Authentizität des öffentlichen Clientschlüssels zu dienen, und wobei der erste Client den privaten Clientschlüssel zum Signieren von Nachrichten verwendet.

Ausführungsformen können den Vorteil haben, dass die Authentizität entsprechender Nachrichten in effizienter Weise sichergestellt werden kann.

Nach Ausführungsformen umfasst die Währungserzeugungsinstanz einen privaten und einen öffentlichen Währungserzeugungsinstanz-Schlüssel eines asymmetrischen Währungserzeugungsinstanz-Schlüsselpaars, und wobei die Währungserzeugungsinstanz ein Währungserzeugungsinstanz-Zertifikat der hierarchischen PKI umfasst, welches dazu konfiguriert ist als Nachweis der Authentizität des öffentlichen Währungserzeugungsinstanz-Schlüssels zu dienen, und wobei die Währungserzeugungsinstanz den privaten Währungserzeugungsinstanz-Schlüssel zum Signieren von Nachrichten verwendet.

Ausführungsformen können den Vorteil haben, dass die Authentizität entsprechender Nachrichten in effizienter Weise sichergestellt werden kann.

Nach Ausführungsformen sind die zuvor genannten kryptographischen Schlüssel, zumindest die geheimen Schlüssel, und/oder Zertifikate jeweils in einem geschützten Speicherbereich der Speicher der elektronischen Geräte gespeichert, denen die Schlüssel bzw. Zertifikate zugeordnet sind. Nach Ausführungsformen werden die zuvor genannten kryptographischen Schlüssel jeweils von einem Sicherheitsmodul der entsprechenden elektronischen Geräte bereitgestellt. Nach Ausführungsformen sind die zuvor genannten kryptographischen Schlüssel, zumindest die geheimen Schlüssel, und/oder Zertifikate jeweils in einem geschützten Speicherbereich der Sicherheitsmodule der entsprechenden elektronischen Geräte gespeichert.

Nach Ausführungsformen sind Sperrlisten zum Sperren der Zertifikate der PKI vorgesehen.

Ausführungsformen können den Vorteil haben, dass durch die Sperrlisten ein effizientes Sperren der im System verwendeten Zertifikate der PKI sichergestellt werden kann. Somit kann einzelnen Transaktionsservern, Währungserzeugungsinstanzen und/oder Client-Nodes die Teilnahmeberechtigung an dem Währungssystem entzogen werden, wenn diese sich beispielsweise nicht an festgelegte Regeln halten. Dies kann beispielsweise im Falle von Manipulationsversuchen erfolgen. Zudem können Zertifikate alter Programmversionen, welche beispielsweise Sicherheitslücken aufweisen, gesperrt werden und somit eine Verwendung ausschließlich aktueller Programmversionen sichergestellt werden. Dadurch wird die Sicherheit des Gesamtsystems erhöht. Zudem ermöglicht dies eine Sperrung der Zertifikate, falls entsprechende Schlüssel abhandenkommen sollten. Die Sperrlisten können durch eine zentrale Sperrinstanz bereitgestellt werden. Bei der Sperrliste kann es sich beispielsweise um eine Positiv- oder Negativliste handeln. Im Falle einer Positivliste umfasst die Liste alle gültigen Zertifikate. Im Falle einer Negativliste umfasst die Sperrliste alle gesperrten Zertifikate. Im Falle einer Positivliste umfasst die Liste vorzugsweise zudem alle jemals gültigen Zertifikate mit einer Angabe des Zeitraums, in welchem diese gültig waren. Im Falle einer Negativliste umfasst die Liste vorzugsweise zudem Angaben zum Zeitpunkt der Sperrung der entsprechenden Zertifikate.

Nach Ausführungsformen kann die Sperrliste in die Blockchain, d.h. die erzeugten Blöcke, integriert werden.

Beispielsweise kann die Sperrliste selbst oder ein Hashwert der Sperrliste zum Zeitpunkt, an dem ein Block erzeugt wurde, in diesen integriert sein. Somit kann jederzeit nachgeprüft werden, ob ein Block auf Basis eines gültigen Zertifikats erzeugt wurde.

Das Grundprinzip von Kryptowährungen wie Bitcoin beruht explizit darauf, dass es keine einzelne oder zentrale Instanz gibt, welche die Kryptowährung zu beeinflussen vermag. Die Kryptowährung bzw. die zugrundeliegende Software kann nur auf Basis eines Mehrheitsentscheids der Nutzer verändert werden, beispielsweise wenn die Mehrheit der Nutzer eine neue Version der Software verwendet. Die Erzeugung neuer Beträge der Kryptowährung erfolgt durch einen Wettbewerb der Nutzer, wobei die Teilnahme jedem offensteht. Der Wettbewerb, das sog. Mining, zielt darauf ab, für die Erzeugung eines neuen Blocks der Blockchain als erster eine rechenaufwändige kryptographische Aufgabe zu lösen. Dem Nutzer, dem dies gelingt, darf sich dafür einen festgelegten neuen Betrag der Kryptowährung gutschreiben. Durch diesen Vorgang werden neue Beträge der Kryptowährung erzeugt. Zudem erhält der Gewinner Transaktionsgebühren für die von dem neuen Block umfassten Transaktionen. Das System ist also darauf ausgelegt, dass im Durchschnitt derjenige gewinnt, welcher die größte Rechenleistung einsetzt und damit die meiste Energie verbraucht. Durch diesen Wettbewerb wird sichergestellt, dass kein unehrlicher Miner mit veränderter Software oder Mehrfachbuchung eine schon erfolgte Transaktion wieder rückgängig macht (Double Spend Attack).

Die vorliegende Erfindung wählt einen ganz anderen Ansatz: Die Blockchain wird über die Zertifikate der Transaktionsserver und die PKI an eine zentrale Instanz, d.h. die Wurzelzertifizierungsinstanz, angebunden. Zudem kann nach Ausführungsformen eine Geldschöpfung nur zentral durch eine hierfür konfigurierte und über ein entsprechendes Zertifikat autorisierte Instanz erfolgen, d.h. eine Währungserzeugungsinstanz. Die von den Nodes, d.h. Wallets und Transaktionsservern, verwendete Software ist mittels entsprechender Zertifikate, d.h. Walletprogramm-Zertifikate und Transaktionsprogramm-Zertifikate, zertifiziert. Die Betreiber der Transaktions-server sind der zentralen Instanz bekannt. Damit kann die Verwendung betrügerischer Software verhindert werden. Insbesondere die Transaktionsserver sind vertrauenswürdig, weil sie von der zentralen Instanz autorisiert sind und ausschließlich zertifizierte Software verwenden.

Da nur zertifizierte Transaktionsserver die Blockchain verlängern können, entfällt die Notwendigkeit, das Netzwerk durch erreichen einer möglichst hohen Rechenleistung zu schützen, welche Manipulationen unmöglich oder zumindest unrentablen macht. Der Kampf um die höchste Rechenleistung entfällt dabei ebenso wie die daraus resultierende Energieverschwendung. Mithin wird der Betrieb von Transaktionsservern auch kostengünstiger.

Die Lösung von Softwareproblemen, und insbesondere das Schließen von Sicherheitslücken, kann zentral gesteuert werden und beispielsweise durch Softwareupdates und den Entzug der Gültigkeit der Zertifikate der alten Software erfolgen.

Die Erzeugung neuer Blöcke der Blockchain kann dabei analog zum Bitcoin-Verfahren erfolgen, wobei jedoch keine neuen Beträge erzeugt werden. Nach Ausführungsformen kann der Schwierigkeitsgrad der Berechnung der kryptographischen Aufgabe im Gegensatz zum Bitcoinsystem so gewählt werden, dass die aufzuwendende Rechenleistung höchstens dem Wert der Transaktionsgebühren des jeweiligen Blocks entsprechen. Vorzugsweise übersteigt der Wert die Rechenleistung im Durchschnitt um einen festgelegten Faktor.

Durch Anbindung der Transaktionsserver an eine PKI verliert die Kryptowährung die Unabhängigkeit gegenüber einer zentralen Stelle. Dafür kann sie nach Ausführungsformen den Vorteil einer effizienten Verwaltung der Blockchain sowie eines effizienten Erzeugens neuer Beträge der Blockchain aufweisen. Andere, beispielsweise von Bitcoin, bekannte Eigenschaften einer Kryptowährung, wie etwa eine verteilte Datenbank, mögliche smart contracts, ein Peer-to-Peer-Netzwerk, können erhalten bleiben. Zudem ist durch die zentrale Steuerung der Währungserzeugung eine direkte Anbindung an eine konventionelle Währung möglich.

Nach Ausführungsformen kann die Kryptowährung insbesondere der staatlichen Finanzaufsicht und Kontrolle unterliegen und an eine konventionelle Währung, wie beispielsweise den Euro, gebunden sein. Geldeinheiten könne nur durch Einzahlung auf ein herkömmliches Bankkonto in Euro erhalten werden. Dieser Vorgang wird durch eine zentrale Instanz oder eine von dieser autorisierten Instanz, wie etwa einer Tauschbörse, sichergestellt. Das Recht zur Ausgabe der Kryptowährung kann durch eine zentrale Instanz beispielweise an Inhaber einer Banklizenz vergeben werden, wobei die ausgegebenen Guthaben in Euro hinterlegt werden müssen Damit ist ein Rücktausch in Euro jederzeit möglich. Es findet keine Geldschöpfung statt. Nach Ausführungsformen erfolgt keine Begrenzung der Geldmenge der Kryptowährung. Nach Ausführungsformen sind anonyme Zahlungen beispielsweise nur bis zu einer Grenze möglich, welche etwa durch gesetzliche Vorschriften gegen Geldwäsche festgelegt wird. Nach Ausführungsformen sind die zertifizierten Walletprogramme und/oder Transaktionsprogramme dazu konfiguriert eine Transaktion höherer Beträge zu blockieren.

Ausführungsformen können den Vorteil haben, dass ein Kauf und Verkauf von Waren und Dienstleistungen Peer-to-Peer mit einer Anonymität wie Bargeld ermöglicht wird. Die Transaktionskosten können dabei geringgehalten werden, beispielweise unter einem Eurocent. Nach Ausführungsformen bieten sich vielfältige Anwendungsmöglichkeiten, wie etwa eine Zahlung an einer Maschine, z.B. Parkautomat, Fahrscheinautomat, Fahrradvermietung. Zudem wird ein anonymer Vertrieb digitaler Güter, wie Musikfiles, Lizenzen, Aktien, Verträge, Zertifikate etc. ermöglicht. Insbesondere sind diese Käufe einem minimierten bis keinem Währungsrisiko durch Währungsschwankungen der Kryptowährung losgelöst von Schwankungen konventioneller Währungen unterworfen.

Nach Ausführungsformen handelt es sich bei dem ersten Client um ein ersten Mobilfunkgerät eines ersten Teilnehmers handelt und bei dem zweiten Client um an ein zweites Mobilfunkgerät eines zweiten Teilnehmers. Der Betrag der Kryptowährung wird über das Internet überweisen. Dem ersten Mobilfunkgerät ist eine erste Telefonnummer und dem zweiten Mobilfunkgerät eine zweite Telefonnummer zugeordnet und das erste und zweite Mobilfunkgerät haben jeweils eine Netzwerkschnittstelle zu einem digitalen zellularen Mobilfunknetzwerk. Für Überweisungen der Kryptowährung werden Zieladressen benutzt, die nur einmal verwendet werden. Der Transaktionsserver ist an das Internet angeschlossen, wobei die Überweisung mittels eines an das Internet angeschlossenen Servercomputers, durch den ein weiterer Client-Node der Kryptowährung gebildet wird, erfolgt und wobei der Servercomputer Zugriff auf eine Registrierungsdatenbank hat, in der Telefonnummern von registrierten Teilnehmern gespeichert sind. Das Verfahren umfasst ferner:
a) Senden einer Nachricht von dem ersten Mobilfunkgerät an den Servercomputer über das Internet, wobei die Nachricht die erste und die zweite Telefonnummer beinhaltet,
b) Durchführung einer Datenbankabfrage der Registrierungsdatenbank mit der zweiten Telefonnummer als Zugriffsschlüssel durch den Servercomputer, um zu prüfen, ob der zweite Teilnehmer bereits registriert ist,
c) in dem Fall, dass der zweite Teilnehmer nicht registriert ist:
   i. Senden einer Zieladresse des Servercomputers von dem Servercomputer an das erste Mobilfunkgerät,
   ii. Erzeugung einer Transaktionsnachricht durch das erste Mobilfunkgerät, wobei die Transaktionsnachricht den zu überweisenden Betrag und die Zieladresse des Servercomputers beinhaltet,
   iii. Senden der Transaktionsnachricht durch das erste Mobilfunkgerät an den Transaktionsserver über das Internet,
   iv. Validierung der Transaktionsnachricht durch den Transaktionsserver mithilfe der Blockchain,
   v. Senden einer Nachricht von dem Servercomputer an das zweite Mobilfunkgerät über einen Signalisierungslayer des Mobilfunknetzwerks, um den zweiten Teilnehmer zur Registrierung aufzufordern,
   vi. Installation des Walletprogramms auf dem zweiten Mobilfunkgerät zur Realisierung eines weiteren Client-Nodes der Kryptowährung,
   vii. Erzeugung einer Zieladresse des zweiten Mobilfunkgeräts durch das auf dem zweiten Mobilfunkgerät installierte Walletprogramm,
   viii. Senden der Zieladresse des zweiten Mobilfunkgeräts von dem zweiten Mobilfunkgerät an den Servercomputer,
   ix. Erzeugung einer weiteren Transaktionsnachricht durch den Servercomputer, wobei die weitere Transaktionsnachricht den Betrag und die Zieladresse des zweiten Mobilfunkgeräts beinhaltet, und Senden der weiteren Transaktionsnachricht durch den Servercomputer an den Transaktionsserver über das Internet,
   x. Validierung der weiteren Transaktionsnachricht durch den Transaktionsserver mithilfe der Blockchain,
d) für den Fall, dass der zweite Teilnehmer bereits registriert ist:
   i. Senden einer Zieladresse des zweiten Mobilfunkgeräts von dem Servercomputer an das erste Mobilfunkgerät, wobei der Servercomputer auf die Zieladresse des zweiten Mobilfunkgeräts mit Hilfe der zweiten Telefonnummer als Zugriffschlüssel zugreift,
   ii. Erzeugung einer Transaktionsnachricht durch das erste Mobilfunkgerät, wobei die Transaktionsnachricht den Betrag und die Zieladresse des zweiten Mobilfunkgeräts beinhaltet,
   iii. Senden der Transaktionsnachricht durch das erste Mobilfunkgerät an den Transaktionsserver über das Internet,
   iv. Validierung der Transaktionsnachricht durch den Transaktionsserver mithilfe der Blockchain.

Ausführungsformen der Erfindung sind besonders vorteilhaft, da eine Überweisung eines Betrags einer Kryptowährung von einem ersten Teilnehmer A, der bereits registriert ist, an einen zweiten Teilnehmer B, der noch nicht registriert ist und der noch kein Walletprogramm auf seinem Mobilfunkgerät installiert hat, auf bequeme und sichere Art und Weise ermöglicht wird.

Ausführungsformen der Erfindung sind besonders vorteilhaft, da der Servercomputer außer der Telefonnummer und den beschriebenen Empfangsadressen keine persönliche Information speichern muss.

Ausführungsformen der Erfindung sind besonders vorteilhaft, da durch das Signieren der Adressen abgesichert werden kann, dass ein betrügerischer Austausch von Adressen nicht stattfinden kann.

Der Teilnehmer A benötigt hierzu lediglich die Telefonnummer des Teilnehmers B und muss sich nicht darüber informieren, ob der Teilnehmer B bereits ein registrierter Teilnehmer der Kryptowährung ist. Der Teilnehmer A kann unabhängig davon, ob der Teilnehmer B bereits registriert ist, die Überweisung vornehmen, da er in die weiteren Schritte, die in Abhängigkeit davon ablaufen, ob der Teilnehmer B bereits registriert ist oder nicht, nicht involviert ist, da diese Schritte von dem Servercomputer und dem Teilnehmer B bzw. dessen Mobilfunkgerät durchgeführt werden. Mit anderen Worten ist der Handhabungsaufwand des Teilnehmers A zur Überweisung eines Betrags an den Teilnehmer B unabhängig davon, ob der Teilnehmer B bereits registriert ist.

Ausführungsformen der Erfindung sind besonders vorteilhaft, wenn das auf dem ersten Mobilfunkgerät des Teilnehmers A installierte Walletprogramm auf von dem Teilnehmer A bereits gespeicherte Kontakte, wie zum Beispiel Outlook-Kontakte, zugreifen kann, in denen die Namen und Telefonnummern von potenziellen Teilnehmern B gespeichert sind, an die A eine Überweisung tätigen könnte. Zur Initiierung einer Überweisung muss dann der Teilnehmer A über eine Nutzerschnittstelle seines Mobilfunkgeräts lediglich einen der Kontakte, zum Beispiel durch Eingabe des Namens des Teilnehmers B, selektieren, sodass die entsprechende Telefonnummer des selektierten Teilnehmers B von dem Walletprogramm aus dem betreffenden Kontakt ausgelesen wird, um damit die Nachricht, die die ersten und zweiten Telefonnummern beinhaltet, zu generieren.

In einem weiteren Aspekt betrifft die Erfindung ein Servercomputersystem, welches als ein entsprechender Transaktionsserver konfiguriert ist zum Ausführen des erfindungsgemäß elektronischen Bezahlverfahrens.

In einem weiteren Aspekt betrifft die Erfindung einen entsprechenden Servercomputer, der zur Verwendung in einer Ausführungsform des erfindungsgemäß elektronischen Bezahlverfahrens konfiguriert ist.

In einem weiteren Aspekt betrifft die Erfindung ein Clientcomputersystem, welches als Client konfiguriert ist zum Ausführen des erfindungsgemäß elektronischen Bezahlverfahrens.

In einem weiteren Aspekt betrifft die Erfindung ein Computersystem, welches als Währungserzeugungsinstanz konfiguriert ist zum Ausführen des erfindungsgemäß elektronischen Bezahlverfahrens.

In einem weiteren Aspekt betrifft die Erfindung ein Datenverarbeitungssystem, welches zumindest ein Servercomputersystem und ein erstes und zweites Clientcomputersystem umfasst. Nach Ausführungsformen umfasst das Datenverarbeitungssystem ferner das zuvor genannte Computersystem und/oder den zuvor genannten Servercomputer.

Im Weiteren werden Ausführungsformen der Erfindung mit Bezugnahme auf die Zeichnungen näher erläutert. Es zeigen:
- Figur 1: ein Blockdiagramm einer beispielhaften PKI eines erfindungsgemäßen kryptographischen Währungssystems,
- Figur 2: ein Blockdiagramm einer ersten beispielhaften Ausführungsform eines erfindungsgemäßen Datenverarbeitungssystems,
- Figur 3: ein Blockdiagramm gemäß einer zweiten beispielhaften Ausführungsform eines erfindungsgemäßen Datenverarbeitungssystems.
- Figur 4: ein Blockdiagramm einer dritte beispielhafte Ausführungsform eines erfindungsgemäßen Datenverarbeitungssystems,
- Figur 5: das Blockdiagramm der Ausführungsform aus Figur 4 nachdem der Teilnehmer B registriert worden ist.

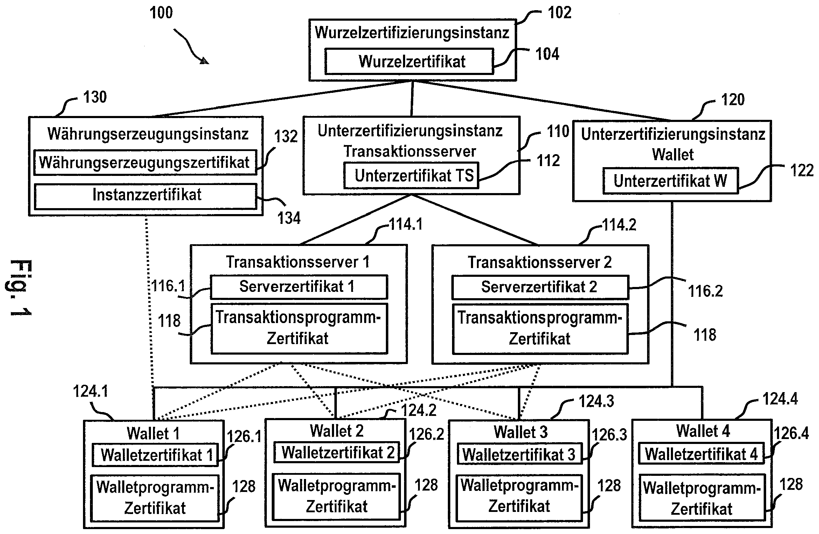

Figur 1 zeigt eine hierarchische PKI 100 mit einer Wurzelzertifizierungsinstanz 102. Sämtliche Zertifikate der PKI 100 gehen auf ein Wurzelzertifikat 104 der Wurzelzertifizierungsinstanz 102 zurück. Der Wurzelzertifizierungsinstanz 102 sind beispielsweise eine Unterzertifizierungsinstanz 110 für die Transaktionsserver sowie eine Unterzertifizierungsinstanz 120 für die Wallets 124.1 bis 124.4 untergeordnet. Die entsprechenden Unterzertifizierungsinstanzen 110, 120 verfügen über Unterzertifikate 112, 122, welche von der Wurzelzertifizierungsinstanz 102 signiert wurden. Mit diesen Unterzertifikaten 112, 122 zertifizieren die Unterzertifizierungsinstanzen 110, 120 die Zertifikate der Transaktionsserver 114.1, 114.2 bzw. der Wallets 124.1 bis 124.4. Um die Authentizität der Zertifikate 116.1, 116.2, 118 der Transaktionsserver 114.1, 114.2 sowie der Zertifikate 126.1 bis 126.4, 128 der Wallets 124.1 bis 124.4 zu überprüfen, wird geprüft, ob die entsprechenden Zertifikate eine Signatur aufweisen, deren Authentizität durch ein Zertifikat 112, 122 der Unterinstanzen 110, 120 oder der Wurzelzertifizierungsinstanz 102 bestätigt werden. Nach Ausführungsformen sind die Transaktionsprogramm-Zertifikate 118 aller Transaktionsserver 114.1, 114.2 identisch, ebenso wie alle Walletprogramm-Zertifikate 128 der Wallets 124.1 bis 124.4 identisch sind.

Zudem ist eine Währungserzeugungsinstanz 130 gezeigt, welche ein Währungserzeugungszertifikat 132 aufweist, das beispielsweise von der Wurzelzertifizierungsinstanz 102 direkt abgeleitet wurde. Nach Ausführungsformen können weitere Unterinstanzen vorgesehen sein. Beispielsweise kann das Währungserzeugungszertifikat 132 der Währungserzeugungsinstanz 130 von einem Unterzertifikat einer eigenständigen Unterzertifizierungsinstanz abgeleitet sein. Nach Ausführungsformen kann das Währungserzeugungszertifikat 132 der Währungserzeugungsinstanz 130 beispielsweise von dem Unterzertifikat 112 der Unterzertifizierungsinstanz 110 abgeleitet sein Nach Ausführungsformen können auch alle Zertifikate direkt von dem Wurzelzertifikat der Wurzelzertifizierungsinstanz 102 abgeleitet sein.

Nach Ausführungsformen können die Wallets 124.1 bis 124.4 neben einem für alle Wallets identischen Walletprogramm-Zertifikat 128 auch ein jeweils individuelles Client- bzw. Walletzertifikat 126.1 bis 126.4 der hierarchischen PKI umfassen. Die Walletprogramm-Zertifikate 128 dienen dem Nachweis, dass die Walletprogramme 128 der Wallets jeweils authentisch sind. Die Walletzertifikat 126.1 bis 126.4 werden von den Wallets 124.1 bis 124.4 beispielsweise zur Absicherung der Kommunikation mit den Transaktionsservern 114.1, 114.2 verwendet und dienen dazu, Nachrichten einzelnen Wallets 124.1 bis 124.4 zuzuordnen. Beispielsweise werden die Nachrichten mit einem geheimen Clientschlüssel eines dem entsprechenden Walletzertifikat 126.1 bis 126.4 zugeordneten asymmetrischen Clientschlüsselpaars. Diese Signatur ist damit von der Wurzelzertifizierungsinstanz 102 abgeleitet und kann wird von der jeweiligen Gegenstelle, z.B. den Transaktionsservern 114.1, 114.2, geprüft werden. Dadurch wird zwar gegenüber den Transaktionsservern 114.1, 114.2 die Anonymität der Transaktionen zu einem gewissen Grad aufgehoben, andererseits ermöglicht dies aber, einzelne Wallets 124.1 bis 124.4 zu identifizieren, welche sich nicht regelkonform verhalten und beispielsweise Manipulationsversuche unternehmen. Entsprechende Wallets können durch Sperrung ihrer Wallet-Zertifikate an weiteren Transaktionen gehindert werden. Dadurch kann die Sicherheit des Systems erhöht werden.

Nach Ausführungsformen können die Transaktionsserver 114.1, 114.2 die individuellen Serverzertifikate 116.1, 116.2 zudem zum Signieren von Nachrichten, beispielsweise an die Wallets 124.1 bis 124.4 verwenden. Genauer gesagt werden die entsprechenden Nachtrichten mit dem geheimen Serverschlüssel des asymmetrischen Serverschlüsselpaars signiert. Insbesondere können mittels der Wallet-Zertifikate 126.1 bis 126.4 und Serverzertifikate 116.1, 116.2, bzw. der zugeordneten asymmetrischen Schlüsselpaare, verschlüsselte Nachrichten zwischen den Transaktionsprogrammen der Transaktionsserver 114.1, 114.2 und den Walletprogrammen der Wallets 124.1 bis 124.4 ausgetauscht werden, beispielsweise mittels TLS. Bei Ausführungsformen mit nur einem Transaktionsserver können Serverzertifikat und Transaktionsprogramm-Zertifikat identisch sein, ebenso wie das asymmetrische Serverschlüsselpaar und ein dem Transaktionsprogramm-Zertifikat zugeordnetes asymmetrisches Transaktionsprogramm-Schlüsselpaar.

Über ein Sperren der Walletprogramm-Zertifikate 128 und/oder der Transaktionsprogramm-Zertifikate 118 kann sichergestellt werden, dass beispielsweise nur Walletprogramme und/oder Transaktionsprogramme verwendet werden, welche auf dem aktuellsten Stand sind. Nach Ausführungsformen kann die Währungserzeugungsinstanz 130 neben einem Währungserzeugungszertifikat 132, welches im Falle mehrerer Währungserzeugungsinstanzen für alle entsprechenden Instanzen identisch sein kann, ein für die Währungserzeugungsinstanz 130 individuelles Währungserzeugungsinstanz-Zertifikat, kurz Instanzzertifikat 134, umfassen. Bei Ausführungsformen mit nur einer Währungserzeugungsinstanz können Währungserzeugungsinstanz-Zertifikat und Währungserzeugungszertifikat identisch sein, ebenso wie das asymmetrische Währungserzeugungsinstanz-Serverschlüsselpaar, kurz Instanz-Schlüsselpaar, und das asymmetrische Währungserzeugungsschlüsselpaar. Die Währungserzeugungsinstanz 130 kann nach Ausführungsformen auch in einen der Transaktionsserver 114.1, 114.2 integriert sein. Hierbei kann nach Ausführungsformen das Währungserzeugungszertifikat 132 mit dem Transaktionsprogrammzertifikat 118 identisch sein und das Instanzzertifikat 134 mit dem entsprechenden Serverzertifikat 116.1, 116.2.

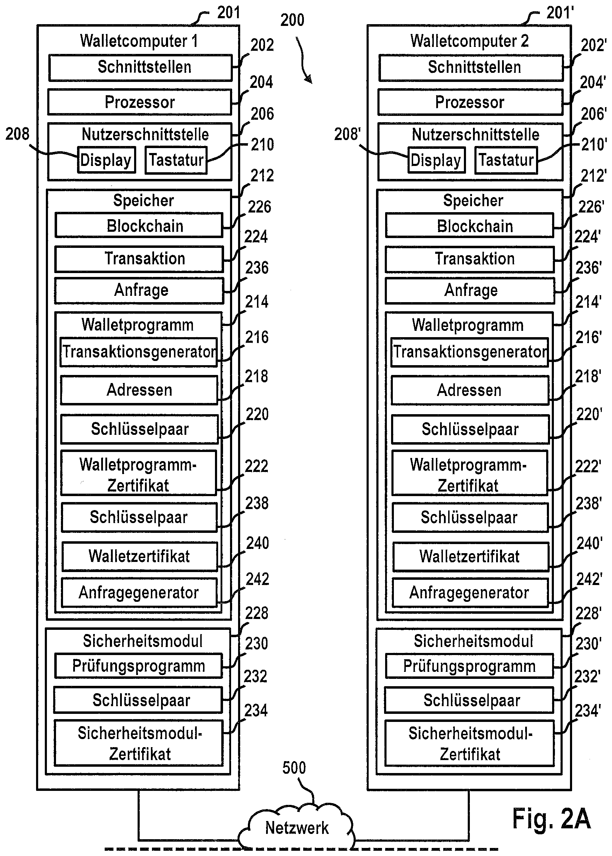

Figur 2A zeigt einen ersten Teil eines Datenverarbeitungssystem 200 mit zwei Walletcomputern 201, 201'. Bei den beiden Walletcomputern 201, 201' kann es sich beispielsweise um PCs, Smartphones, Tablet PCs, Notebooks oder PDAs handeln.

Die Walletcomputer 201, 201' umfassen jeweils eine Kommunikationsschnittstelle 202, 202' zur Kommunikation über ein Netzwerk 500. Bei dem Netzwerk 500 kann es sich um ein Computernetzwerk, wie zum Beispiel das Internet oder ein Intranet, handeln. Zudem umfassen sie jeweils einen Prozessor 204, 204', und eine Nutzerschnittstelle 206, 206', welche beispielsweise ein Display 208, 208' sowie eine Tastatur 210, 210' umfassen können. Nach Ausführungsformen kann es sich bei dem Display 208, 208' auch um ein Touch-Display handeln, bei welchem die Tastatur in das Display integriert ist.

Des Weiteren weisen die beiden Walletcomputer 201, 201' jeweils einen Speicher 212, 212' auf, welcher das Walletprogramm 214, 214' umfasst. Das Walletprogramm weist einen Transaktionsgenerator 216, 216' zur Erzeugung von Transaktionsnachrichten auf. Zudem umfasst das Walletprogramm 214, 214' die Adressen 218, 218', welche dem Walletprogramm 214, 214' zugeordnet sind. Genauer gesagt umfasst das Walletprogramm 214, 214' kryptographische Schlüssel, welche mit den Adressen 218, 218' oder von diesen abgeleiteten Werten asymmetrische Schlüsselpaare bilden. Des Weiteren umfasst das Walletprogramm 214, 214' ein Walletprogramm-Zertifikat 222, 222' sowie ein asymmetrisches Schlüsselpaar 220, 220', welches dem Walletprogramm-Zertifikat 222, 222' zugeordnet ist. Der geheime Schlüssel des asymmetrischen Schlüsselpaars 220, 220' dient zur Erzeugung von Signaturen durch das Walletprogramm. Zudem kann das Walletprogramm ein Wallet-Zertifikat 240, 240' sowie ein dem Wallet-Zertifikat 240, 240' zugeordnetes asymmetrisches Schlüsselpaar 238, 238' umfassen. Das asymmetrische Schlüsselpaar 238, 238' dient beispielsweise zur Verschlüsselung der Kommunikation über das Netzwerk 500. Zudem kann der Speicher 212, 212' nach Ausführungsformen auch einen Anfragegenerator 242, 242' zur Erzeugung von Währungserzeugungsanfragen 236, 236' umfassen. Schließlich kann in dem Speicher 212, 212' die Blockchain 226 gespeichert sein, ebenso wie von dem Walletprogramm 214, 214' erzeugte Transaktionsnachrichten 224, 224'.

Die beiden Walletcomputer 201, 201' umfassen jeweils ein Sicherheitsmodul 228, 228', welches jeweils ein Prüfprogramm 230, 230' umfasst. Die Prüfprogramme 230, 230' sind jeweils dazu konfiguriert, den Hashwert des Walletprogramms 214, 214' zu berechnen und ihn gegebenenfalls auf seine Korrektheit zu überprüfen. Zudem umfassen die Sicherheitsmodule 228, 228' jeweils ein asymmetrisches Schlüsselpaar 232, 232' zusammen mit einem zugeordneten Sicherheitsmodulzertifikat 234, 234'. Mit den geheimen Schlüsseln der asymmetrischen Schlüsselpaare 232, 232' können die durch die Prüfprogramme 230, 230' berechneten Hashwerte signiert werden. Zudem können die Sicherheitsmodule 228, 228'dazu konfiguriert sein, die Gültigkeit berechneter Hashwerte, welche über das Netzwerk 500 von einem anderen Sicherheitsmodul übermittelt werden, zu überprüfen.

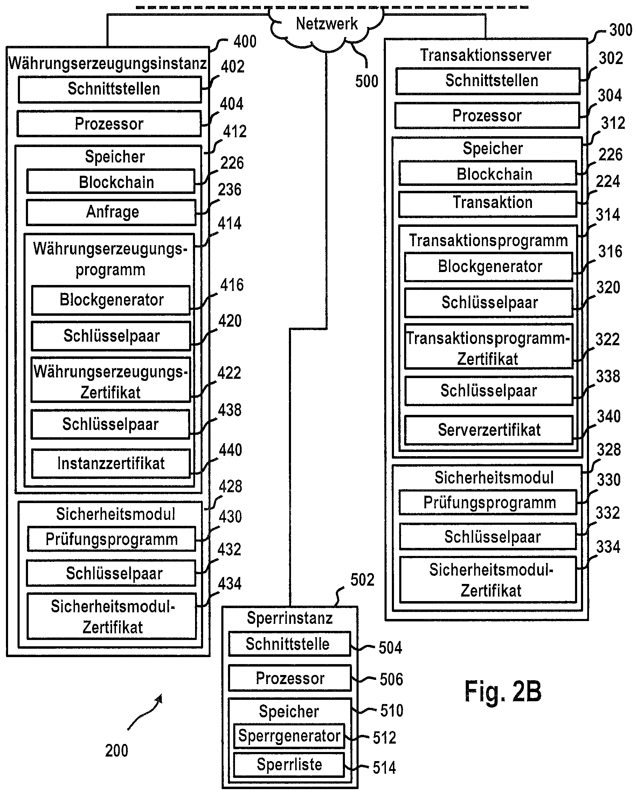

Zudem umfasst das Datenverarbeitungssystem 200, wie in Figur 2B gezeigt, zumindest einen Transaktionsserver 300, welcher eine Kommunikationsschnittstelle 302 zur Kommunikation über das Netzwerk 500 mit den Walletcomputern 201, 201' umfasst. Weiterhin umfasst der Transaktionsserver 300 zumindest einen Prozessor 304 und einen Speicher 312. Der Speicher 312 umfasst beispielsweise ein Transaktionsprogramm 314, welches einen Blockgenerator 316 zur Erzeugung von Blöcken in der Blockchain 226 umfasst. Weiterhin umfasst das Transaktionsprogramm 314 beispielsweise ein Serverzertifikat 322 sowie ein zugehöriges asymmetrisches Schlüsselpaar 320. Ferner umfasst das Transaktionsprogramm 314 nach Ausführungsformen ein Serverzertifikat 340 sowie ein zugeordnetes asymmetrisches Schlüsselpaar 338. Des Weiteren umfasst der Speicher 312 die Blockchain 226, zu welcher die von dem Blockgenerator 316 erzeugten Blöcke hinzugefügt werden. Des Weiteren umfasst der Speicher 312 die Transaktionsnachrichten 224, 224', welche von den Walletprogrammen 214, 214' der beispielhaften Walletcomputer 201, 201' erzeugt und über das Netzwerk 500 an den Transaktionsserver 300 übermittelt werden. Nach Ausführungsformen wird die resultierende Blockchain 226 über das Internet 500 an weitere ggf. vorhandene Transaktionsserver verteilt. Die Walletprogramme 214, 214' der Walletcomputer 201, 201' Daten der Blockchain einem der Transaktionsserver ab und ermitteln aus der Blockchain den Wert der Wallet. Der Wert der Wallet ergibt sich aus der Summe der Beträge aller Empfangsadressen 218 für die die Wallet den zugeordneten privaten Schlüssel besitzt. Nach weiteren Ausführungsformen wird die resultierende Blockchain 226 wird über das Netzwerk 500 an die Walletprogramme 214, 214' der Walletcomputer 200, 200' übermittelt.

Ferner umfasst der Transaktionsserver 300 ein Sicherheitsmodul 328, welches ein Prüfprogramm 330 zum Berechnen des Hashwerts des Transaktionsprogramms 314 und gegebenenfalls zur Überprüfung der Korrektheit des berechneten Hashwerts aufweist. Zum Signieren des errechneten Hashwerts bzw. des Ergebnisses der Überprüfung des errechneten Hashwerts umfasst das Sicherheitsmodul 328 ein asymmetrisches Schlüsselpaar 332 sowie ein Sicherheitsmodulzertifikat 334. Zudem kann das Sicherheitsmodule 328 dazu konfiguriert sein, die Gültigkeit berechneter Hashwerte, welche über das Netzwerk 500 von einem anderen Sicherheitsmodul übermittelt werden, zu überprüfen.

Des Weiteren umfasst das Datenverarbeitungssystem 200 eine Währungserzeugungsinstanz 400. Die Währungserzeugungsinstanz 400 umfasst eine Kommunikationsschnittstelle 402 zur Kommunikation mit den Walletcomputern 201, 201' über das Netzwerk 500. Die Währungserzeugungsinstanz 400 umfasst zudem zumindest einen Prozessor 404 und einen Speicher 412. Der Speicher 412 umfasst ein Währungserzeugungsprogramm 414, welches den Währungserzeugungsblockgenerator 416 sowie ein Währungserzeugungszertifikat 422 und ein zugeordnetes asymmetrisches Schlüsselpaar 420 umfasst. Zusätzlich kann die Währungserzeugungsinstanz ein Instanzzertifikat 440 sowie ein zugeordnetes asymmetrisches Schlüsselpaar 438 umfassen. Das Währungserzeugungsprogramm 414 ist dazu konfiguriert, Anfragen 236, 236' von den Walletprogrammen 214, 214' über das Netzwerk 500 zu empfangen, auf ihre Gültigkeit zu überprüfen und im Falle ihrer Gültigkeit einen Block der Blockchain 226 zu erzeugen, welcher eine entsprechende Währungserzeugungstransaktion umfasst. Die Blockchain 226, welche in den neu erzeugten Währungserzeugungsblock umfasst, wird über das Netzwerk 500 an den Transaktionsserver 300 sowie in die Walletprogramme 214, 214' bzw. die Walletcomputer 201, 201' übermittelt.

Weiterhin umfasst die Währungserzeugungseinheit nach Ausführungsformen ein Sicherheitsmodul 428 mit einem Prüfprogramm 430 zum Berechnen des Hashwerts des Währungserzeugungsprogramms 414 und gegebenenfalls zur Überprüfung des berechneten Hashwerts. Des Weiteren umfasst das Sicherheitsmodul 428 ein asymmetrisches Schlüsselpaar 432 und ein Sicherheitsmodul Zertifikat 434 zur Signierung des berechneten Hashwerts und/oder des Ergebnisses der Gültigkeitsprüfung. Zudem kann das Sicherheitsmodule 428 dazu konfiguriert sein, die Gültigkeit berechneter Hashwerte, welche über das Netzwerk 500 von einem anderen Sicherheitsmodul übermittelt werden, zu überprüfen.

Schließlich umfasst das Datenverarbeitungssystem 200 eine Sperrinstanz 502 mit einer Kommunikationsschnittstelle 504 zur Kommunikation über das Netzwerk 500 mit den Walletcomputern 201, 201', dem Transaktionsserver 300 sowie der Währungserzeugungsinstanz 400. Die Sperrinstanz 502 wird beispielsweise von einem Server bereitgestellt, welcher einen Prozessor 506 und einen Speicher 510 umfasst. Der Speicher 510 umfasst einen Sperrgenerator zur Erzeugung einer Sperrliste 514. Alternativ kann der Server Zugriff auf eine Datenbank haben, welche den Speicher 510 umfasst. Die Sperrliste 514 ist beispielsweise eine Negativsperrliste, welche alle gesperrten Zertifikate inklusive Zeitpunkt der Sperrung umfasst. Nach alternativen Ausführungsformen ist die Sperrliste 514 eine Positivliste, welche alle jemals gültigen Zertifikate sowie deren Gültigkeitszeitraum, zumindest aber deren Ablaufzeitpunkte, umfasst. Mittels der von der Sperrinstanz 502 bereitgestellten Sperrliste 514 kann von allen Teilnehmern des Datenverarbeitungssystems jederzeit die Gültigkeit der Zertifikate überprüft werden. Insbesondere kann überprüft werden, ob die Blöcke der Blockchain 226 jeweils mit einem zum Zeitpunkt ihrer Erzeugung gültigen Serverzertifikat 340 signiert wurden.

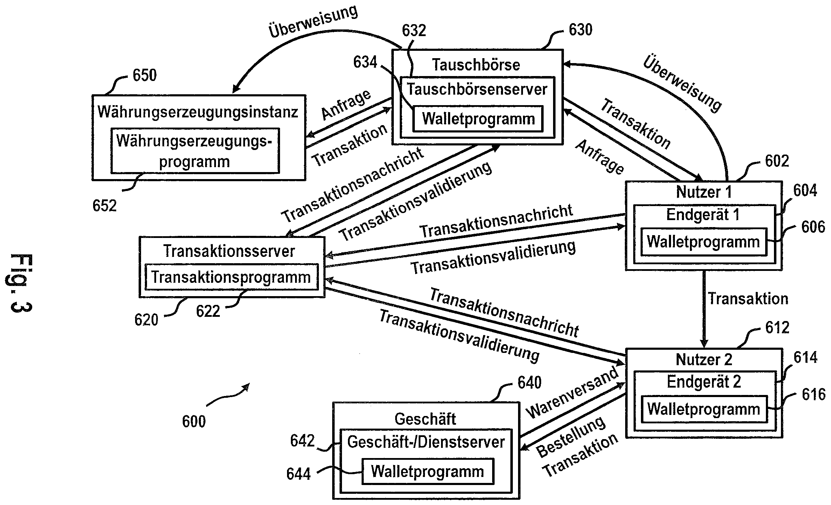

Figur 3 zeigt eine beispielhafte Infrastruktur eines erfindungsgemäßen kryptographischen Währungssystems mit einer zweiten beispielhaften Ausführungsform eines Datenverarbeitungssystems 600. Die Infrastruktur umfasst einen ersten Nutzer 602 und einen zweiten Nutzer 612. Jedem der beiden Nutzer ist jeweils ein Nutzer-Endgerät 604, 614, beispielsweise in Form eines Mobilfunkgeräts, zugeordnet. Auf den Nutzer-Endgeräten 604, 614 ist jeweils ein Walletprogramm 606, 616 installiert. Die Nutzer-Endgeräte 604, 614 sind dazu konfiguriert, mit einem Transaktionsserver 620 zu kommunizieren, ebenso wie einem Tauschbörsenserver 632, der einer Tauschbörse 630 zugeordnet ist, sowie einem Geschäft- oder Dienstserver 642, welcher einem Geschäft 640 zugeordnet ist. Der Tauschbörsenserver 632 umfasst ein Walletprogramm 634, ebenso wie der Geschäfts- oder Dienstserver, welcher ebenfalls ein Walletprogramm 644 umfasst. Ferner ist eine Währungserzeugungsinstanz 650 vorgesehen. Die Währungsinstanz 650 umfasst ein Währungserzeugungsprogramm 652. Der Transaktionsserver 620 umfasst ein Transaktionsserverprogramm 622.

Das Walletprogramm 606 erzeugt und sendet beispielsweise eine Währungserzeugungsanfrage an den Tauschbörsenserver 632. Zudem lässt der Nutzer 602 der Tauschbörse 630 beispielsweise mittels einer konventionelle Überweisung einen gemäß einem festgelegten Wechselkurs bestimmten Geldbetrag in einer konventionellen Währung zukommen. Die Tauschbörse 630 erstellt mittels Walletprogramm 634 beispielsweise eine Währungserzeugungsanfrage an die Währungserzeugungsinstanz 650. Zudem hinterlegt die Tauschbörse 630 den entsprechenden Geldbetrag in einer konventionellen Währung auf einem Konto bei der Währungserzeugungsinstanz 650. Die Währungserzeugungsinstanz 650 erzeugt daraufhin mit ihrem Währungserzeugungsprogramm 652 den angefragten Betrag der kryptographischen Währung in Form einer Währungserzeugungstransaktion eines neuen Währungserzeugungsblocks der Blockchain. Der entsprechende Währungsbetrag wird dabei einer Zieladresse des Walletprogramms 634 gutgeschrieben. Der Tauschbörsenserver 632 sendet daraufhin mittels seines Walletprogramms 634 eine Transaktionsnachricht an den Transaktionsserver 600, welche diese mit seinem Transaktionsprogramm 622 validiert und bei erfolgreicher Validierung einen neuen Block zu der Blockchain hinzufügt, welcher die entsprechende Transaktion umfasst. Dadurch wird der angefragte Betrag der kryptographischen Währung einer Zieladresse des Walletprogramms 606 des ersten Nutzers zugeordnet.

Der erste Nutzer erstellt beispielsweise mit seinem Walletprogramm 606 eine Transaktionsnachricht, welche einen zweiten Betrag der kryptographischen Währung einer Zieladresse des Walletprogramms 616 des zweiten Nutzers zuordnet. Die entsprechende Transaktionsnachricht wird an den Transaktionsserver 620 geschickt und von dessen Transaktionsprogramm 622 validiert. Im Falle einer erfolgreichen Validierung wird ein neuer Block der Blockchain erzeugt, welcher die Transaktion umfasst. Dadurch wird der zweite Betrag der kryptographischen Währung an eine dem Walletprogramm 616 zugeordneten Zieladresse überwiesen.

Der zweite Nutzer kann mit diesem Kryptogeld nun beispielsweise bei einem Geschäft 640 einkaufen. Hierzu erstellt er eine Transaktionsnachricht über einen dritten Betrag der kryptographischen Währung, welcher von der Zieladresse des zweiten Betrags der kryptographischen Währung einer Zieladresse des Walletprogramms 644 zugeschrieben werden soll. Diese Transaktionsnachricht wird wiederum an den Transaktionsserver 620 übermittelt, welcher diese mit seinem Transaktionsprogramm 622 validiert. Im Falle einer erfolgreichen Validierung wird die Transaktionsnachricht in einen neuen Block der Blockchain aufgenommen. Dadurch wird der dritte Betrag der kryptographischen Währung an eine Zieladresse, welche dem Walletprogramm 644 zugeordnet ist, überwiesen. Der Geschäfts- oder Dienstserver 642 kann mittels des Walletprogramms 644 die Blockchain überprüfen und somit eruieren, ob der dritte Betrag der kryptographischen Währung erfolgreich an die entsprechende Zieladresse überwiesen wurde. Ist dies der Fall, so kann er gegenüber dem Geschäft den entsprechenden Zahlungseingang bestätigen und die georderte Ware wird an den zweiten Nutzer übersandt.

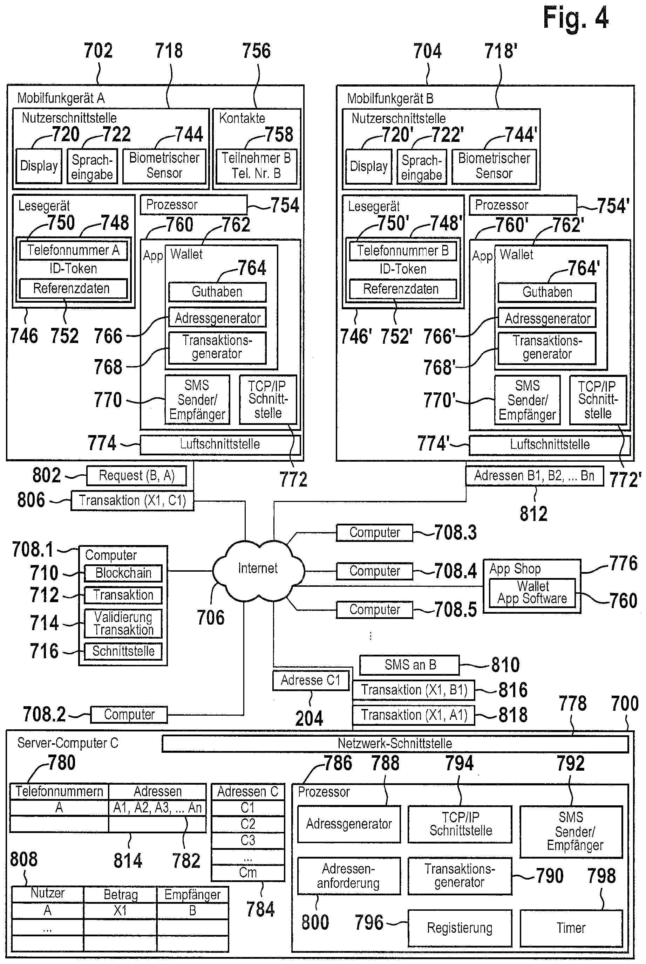

Die Figur 4 zeigt ein Datenverarbeitungssystem mit einem Servercomputer 700, der nachfolgend auch als "C" bezeichnet wird. Zu dem Datenverarbeitungssystem gehören Mobilfunkgeräte, insbesondere beispielhaft die Mobilfunkgeräte 702 des Teilnehmers A und 704 des Teilnehmers B.

Zumindest durch das Mobilfunkgerät 702 des Teilnehmers A und durch den Servercomputer 700 werden Client-Nodes einer Kryptowährung gebildet, die über ein Netzwerk, wie beispielsweise das Internet 706, miteinander kommunizieren können. Zu dem Netzwerk der Kryptowährung gehören ferner mehrere Transaktionsserver 708, von denen die Transaktionsserver 708.1 bis 708.5 beispielhaft in der Figur 4 gezeigt sind. Jeder der Transaktionsserver 708 wird durch einen Computer implementiert, der an das Internet 706 angeschlossen ist.

Die Figur 4 zeigt beispielhaft den Transaktionsserver 708.1 in einer detaillierteren Ansicht. Der Transaktionsserver 708.1 ist dazu ausgebildet, Transaktionsnachricht von den Client-Nodes über das Internet 706 zu empfangen, die Transaktionen zur Überweisung von Beträgen der Kryptowährung spezifizieren. Solch Transaktionsnachrichten werden als Broadcast von einem Client-Node an alle anderen Nodes, einschließlich der Client-Nodes und Transaktionsserver des Netzwerks der Kryptowährung gesendet. Nach Ausführungsformen werden die Transaktionsnachrichten nur an die Transaktionsserver gesendet. Der Transaktionsserver 708.1 hat eine Kommunikationsschnittstelle 716 zum Anschluss des Transaktionsserver 708.1 an das Internet 706.

Empfängt beispielsweise der Transaktionsserver 708.1 eine Transaktionsnachricht, die eine Transaktion 712 spezifiziert, so wird durch Ausführung eines Programmmoduls 714, welches das Transaktionsprogramm umfasst, mithilfe der Blockchain 710 die Validität der Transaktion 712 geprüft. Nach Ausführungsformen erfolgt dies in einem zeitlichen Wettbewerb mit den anderen Transaktionsserver 708, die im Prinzip gleich aufgebaut sind. Nach Ausführungsformen werden die Transaktionsnachrichten den einzelnen Transaktionsserver nach einem festgelegten Verteilungsschema zur Bearbeitung zugeordnet.

Im Falle eines zeitlichen Wettbewerbs, gewinnt derjenige der Transaktionsserver 708, welcher als erster die Transaktion 712 validieren kann, und erzeugt einen weiteren Block der Blockchain 710, welchen er signiert. Dies signalisiert der obsiegende Transaktionsserver, beispielsweise der Transaktionsserver 708.1, an alle anderen Nodes des Netzwerks der Kryptowährung. Der Aufbau der Blockchain sowie die Funktionalität der Transaktionsserver können dabei im Wesentlichen analog zu dem Bitcoin-Netzwerk sein, wie beispielsweise in "Mastering Bitcoin" beschrieben. Die Funktionalität der Transaktionsserver unterscheidet sich dahingehen, dass sie jeweils ein Serverzertifikat aufweisen und die von ihnen erzeugten Blöcke der Blockchain signieren. Die Transaktionsserver sind dabei nicht berechtigt neue Beträge der Kryptowährung zu erzeugen. Ferner wird die maximale Anzahl an Transaktionsservern der Blockchain begrenzt.

Das Mobilfunkgerät 702 des Nutzers A hat eine Nutzerschnittstelle 718, das heißt ein sogenanntes User-Interface, welches beispielsweise ein Display 720, insbesondere ein berührungsempfindliches Display, das heißt ein sogenanntes Touchpanel, aufweist sowie beispielsweise ein Spracheingabemodul 722 zur Eingabe von natürlich-sprachlichen Kommandos und einen biometrischen Sensor 744. Beispielsweise kann der biometrische Sensor 744 für eine biometrische Authentifizierung des Nutzers gegenüber dem Mobilfunkgerät 702 dienen als Alternative oder zusätzlich zu einer Authentifizierung mittels einer PIN.

Das Mobilfunkgerät 702 hat ferner ein Lesegerät 746, welches einen integralen Bestandteil des Mobilfunkgeräts 702 bilden kann. Das Lesegerät 746 dient zur Kommunikation mit einem ID-Token 748, bei dem es sich beispielsweise um eine SIM-Karte oder ein elektronisches Ausweisdokument, wie zum Beispiel einen elektronischen Personalausweis handelt, zu letzterem vergleiche WO 8010/145979 A1.

Beispielsweise sind in dem ID-Token 748 eine Telefonnummer, in diesem Fall die Telefonnummer A des Teilnehmers A, in einem sicheren Speicherbereich 750 gespeichert, auf den nur ein Prozessor des ID-Tokens 748 zugreifen kann sowie Referenzdaten, die in einem weiteren sicheren Speicherbereich 752 gespeichert sind. Die Referenzdaten dienen dabei zur Authentifizierung des Nutzers A gegenüber dem Mobilfunkgerät 702 mit dem in dem Lesegerät 746 befindlichen ID-Token 748.

Beispielsweise gibt der Nutzer A zu seiner Authentifizierung gegenüber dem Mobilfunkgerät 702 seine PIN über das Display 720 ein. Die eingegebene PIN wird dann auf Übereinstimmung mit den in dem Speicherbereich 752 gespeicherten Referenzdaten durch den Prozessor des ID-Tokens geprüft. Der Prozessor gibt im Falle einer Übereinstimmung ein Freigabesignal ab, sodass anschließend die Funktionen des Mobilfunkgeräts 702 von dem Nutzer A genutzt werden können.

Das Mobilfunkgerät 702 hat einen Prozessor 754, der zur Ausführung verschiedener Anwendungsprogramme dient, die auf dem Mobilfunkgerät 702 installiert sein können. Hierzu kann ein Anwendungsprogramm 756 gehören, welches zur Speicherung von Kontakten, beispielsweise des Kontakts 758, dient sowie zur Auswahl eines Kontakts, beispielsweise um einen Anruf zu dem entsprechenden Teilnehmer zu tätigen oder eine SMS zu senden.

In der hier betrachteten Ausführungsform ist ein Walletprogramm in Form einer Wallet-App 760 auf dem Mobilfunkgerät 702 installiert, das heißt eine App, durch die eine digitale Wallet 762 für den Nutzer A zur Verfügung gestellt wird. Die Wallet 762 dient zur Speicherung von Daten 764, durch die eine Geldmenge einer Kryptowährung spezifiziert ist, die dem Teilnehmer A gehört. Die Wallet 762 hat ferner einen Adressgenerator 766 zur Generierung von Zieladressen des Mobilfunkgeräts 702 sowie einen Transaktionsgenerator 768 zur Generierung von Transaktionsnachrichten.

Die Wallet-App 760 hat ferner eine Schnittstelle 770 zumindest zum Senden von SMS-Nachrichten und eine Schnittstelle 772 zum Senden und Empfangen von Nachrichten über das Internet 706 nach dem TCP/IP-Protokoll. Das Mobilfunkgerät 702 hat ferner eine Luftschnittstelle 774, das heißt ein sogenanntes Air-Interface, zur Verbindung des Mobilfunkgeräts 702 mit einem digitalen zellulären Mobilfunknetzwerk, über welches das Mobilfunkgerät 702 auch über das Internet 706 kommunizieren kann.

Das Mobilfunkgerät 704 des Teilnehmers B ist prinzipiell gleich aufgebaut wie das Mobilfunkgerät 702, wobei nicht dieselben Apps auf dem Mobilfunkgerät 704 installiert sein müssen. Insbesondere ist auf dem Mobilfunkgerät 704 zunächst keine Instanz der Wallet-App 760 installiert. Die Elemente des Mobilfunkgeräts 704, die Elemente des Mobilfunkgeräts 702 entsprechen, werden im Weiteren mit denselben Bezugszeichen, die um einen Apostroph ergänzt sind, gekennzeichnet.

Die Wallet-App 760 steht als Wallet-App Software in einem App-Shop 776 zum Download über das Internet 706 zur Verfügung. Der App-Shop 776 und die darin befindliche Wallet-App 760 können durch eine URL spezifiziert sein, sodass zur Installation der Wallet-App 760 zum Beispiel auf dem Mobilfunkgerät 704 lediglich diese URL der Wallet-App 760 auf dem Mobilfunkgerät 704 selektiert werden muss, um eine Instanz 760' der Wallet-App dort zu installieren.

Der Servercomputer 700 hat eine Netzwerkschnittstelle 778 zur Verbindung des Servercomputers 700 mit dem Internet 706. Der Servercomputer 700 hat ferner eine Registrierungsdatenbank 780, in der beispielsweise der Teilnehmer A registriert ist, indem die Telefonnummer A dieses Teilnehmers A dort eingetragen ist. Der Telefonnummer A ist eine Anzahl von n Zieladressen A1 bis An zugeordnet, die in einem Pufferspeicher 782 des Servercomputers 700 gespeichert sind. Hierbei handelt es sich um Zieladressen des Mobilfunkgeräts 702.

Die Telefonnummer B des Teilnehmers B ist in der Registrierungsdatenbank 780 zunächst nicht gespeichert, da der Teilnehmer B noch nicht registriert ist.

Der Servercomputer 700 hat ferner einen Pufferspeicher 784, in dem eine Anzahl von m Zieladressen C1 bis Cm des Servercomputers 700 gespeichert sind.

Der Servercomputer 700 hat einen Prozessor 786 zur Ausführung eines Adressgenerators 788 für die Erzeugung der Zieladressen des Servercomputers 700, die in dem Pufferspeicher 784 gespeichert werden. Der Prozessor 786 dient ferner zur Ausführung eines Transaktionsgenerators 790, der analog zu dem Transaktionsgenerator 768 für die Generierung von Transaktionen ausgebildet ist sowie von Modulen 792 und 794 analog zu den Modulen 770 bzw. 772 des Mobilfunkgeräts 702.

Der Prozessor 786 dient ferner zur Ausführung eines Programmmoduls 796, welches zur Registrierung eines weiteren Teilnehmers, beispielsweise des Teilnehmers B, ausgebildet ist. Das Programmmodul 796 kann einen Timer 798 starten. Ein weiteres Programmmodul 800 dient zur Anforderung von Zieladressen von den Teilnehmern.

Zur Überweisung eines Betrags einer Kryptowährung von dem Guthaben des Teilnehmers A an den Teilnehmer B wird beispielsweise wie folgt vorgegangen:
a) Der Teilnehmer A startet die auf dem Mobilfunkgerät 702 installierte Wallet-App 760 und gibt dort den zu überweisenden Betrag, beispielsweise den Betrag X1, ein. Ferner spezifiziert der Teilnehmer A, an welchem anderen Teilnehmer, hier den Teilnehmer B, der Betrag X1 überwiesen werden soll. Dies kann dadurch erfolgen, dass der Teilnehmer A die Telefonnummer B des Teilnehmers B manuell oder per Spracheingabe in die Wallet-App 760 eingibt. Alternativ kann der Teilnehmer A das Anwendungsprogramm 756 aufrufen, um den Kontakt 758 des Teilnehmers B auszuwählen, in dem die Telefonnummer B gespeichert ist. Durch Auswahl dieses Kontakts 758 wird die dort gespeicherte Telefonnummer B an die Wallet-App 760 übergeben.
   Die Wallet-App 760 erzeugt dann eine Nachricht 802, die die Telefonnummern B und A beinhaltet, das heißt "Request (B, A)". Diese Nachricht 702 sendet die Wallet-App 760 über das Internet 706 an den Servercomputer 700.
b) Der Servercomputer 700 führt daraufhin mit der Telefonnummer B als Zugriffsschlüssel einen Datenbankzugriff auf die Registrierungsdatenbank 780 durch, welcher ins Leere geht, da eine Registrierung des Teilnehmers B bisher nicht erfolgt ist.
c) Da hier der Fall vorliegt, dass der Teilnehmer B noch nicht registriert ist, werden nun die folgenden Schritte durchgeführt:
   i. Der Servercomputer 700 antwortet auf die Nachricht 802, indem er aus dem Pufferspeicher 784 die nächste seiner Zieladressen, hier C1, ausliest und diese Zieladresse als Antwort 804 auf die Nachricht 802 an das Mobilfunkgerät 702 sendet.
   ii. Durch den Transaktionsgenerator 768 wird daraufhin eine Transaktionsnachricht 806 generiert, welche eine Transaktion zur Überweisung des Betrags X1 an den Servercomputer 700 spezifiziert, indem die Adresse C1 als Zieladresse für die Transaktion verwendet wird.
   iii. Die Transaktionsnachricht 806 wird dann als Broadcast an die Nodes des Netzwerks der Kryptowährung gesendet, das heißt sowohl an die Client-Nodes, einschließlich dem Servercomputer 700 und die Transaktionsserver 708.
   iv. Die Transaktionsserver versuchen dann die in der Transaktionsnachricht 806 spezifizierte Transaktion in einen zeitlichen Wettbewerb mit Hilfe der in dem jeweiligen Transaktionsserver vorhandenen Instanz der Blockchain 710 zu validieren. Der erste der Transaktionsserver 708, dem dies gelingt, erzeugt einen weiteren Block der Blockchain 710 und signalisiert die erfolgreiche Validierung an die anderen Nodes des Netzwerks der Kryptowährung. Nach erfolgreicher Validierung ist damit eine Überweisung des Betrags X1 von dem Mobilfunkgerät 702 an den Servercomputer 700 erfolgt. Der Servercomputer 700 speichert dies in einer Transaktionsdatenbank 808 ab, in der der von dem Nutzer A empfangene Betrag X1 und der von dem Nutzer A in der Nachricht 802 spezifizierte Empfänger B durch die jeweiligen Telefonnummern A bzw. B bestimmt sind.
   v. Nach dem Erhalt des Betrags X1 von dem Teilnehmer A, welcher für den Teilnehmer B bestimmt ist, durch den Servercomputer 700, wird durch das Programmmodul 796 die erforderliche Registrierung des Teilnehmers B eingeleitet, um den Betrag X1 an den Teilnehmer B weiterüberweisen zu können. Hierzu generiert das Programmmodul 796 eine Nachricht für den Teilnehmer B, um dem Teilnehmer B die erforderliche Registrierung mitzuteilen. Da von dem Teilnehmer B nur die Telefonnummer bekannt ist, wird diese Nachricht über einen Signalisierungslayer des Mobilfunknetzwerks von dem Servercomputer 700 gesendet, beispielsweise durch Erzeugung einer SMS 810 durch das Modul 792. Die SMS 810 kann eine textuelle Mitteilung an den Teilnehmer B beinhalten die ihn über die Geldsendung informiert und dazu auffordert, eine Instanz der Wallet-App 760' von dem App-Shop 776 zu laden. und auf seinem Mobilfunkgerät 704 zu installieren. Insbesondere kann die SMS 810 den Link auf die Wallet-App 760 in dem App-Shop 776 beinhalten, sodass der Teilnehmer B lediglich diesen Link selektieren muss, um den Installationsprozess zu starten.
      Alternativ kann es sich bei der SMS 810 auch um eine sogenannte binary SMS handeln, um eine vollautomatische Installation der Instanz 760' der Wallet-App auf dem Mobilfunkgerät 704 ohne Zutun des Teilnehmers B zu initiieren. Für die Zwecke der nachfolgenden Beschreibung wird jedoch davon ausgegangen, dass es sich bei der Nachricht 810 um eine SMS und nicht um eine binary SMS handelt.
   vi. Aufgrund des Empfangs der SMS 810 von dem Mobilfunkgerät 704 installiert der Teilnehmer B eine Instanz 760' der Wallet-App auf seinem Mobilfunkgerät 704, beispielsweise durch Herunterladen von dem App-Shop 776.
   vii. Der Adressgenerator 766' erzeugt dann eine Anzahl von n Zieladressen B1 bis Bn für das Mobilfunkgerät 704.
   viii. Diese Zieladressen werden dann mit einer Nachricht 812 von dem Mobilfunkgerät 704 über das Internet 706 an den Servercomputer 700 übertragen. Damit wird gleichzeitig das Einverständnis des Teilnehmers B für die Durchführung seiner Registrierung an den Servercomputer 700 kommuniziert.
      Durch das Programmmodul 796 wird dann eine Registrierung des Teilnehmers B in der Registrierungsdatenbank 780 vorgenommen, indem die Telefonnummer des Teilnehmers B dort eingetragen wird und die Zieladressen, die mit der Nachricht 812 empfangen worden sind, in einem Pufferspeicher 814 gespeichert und diesem Eintrag der Telefonnummer B in der Registrierungsdatenbank 780 zugeordnet werden.
   ix. Von dem Transaktionsgenerator 790 wird dann eine Transaktionsnachricht 816 generiert, die die Zieladresse B1 und den Betrag X1 beinhaltet, den der Transaktionsgenerator 790 aus der Transaktionsdatenbank 808 ausliest. Die Transaktionsnachricht 816 wird wiederum als Broadcast an die Nodes des Netzwerks der Kryptowährung über das Internet 706 gesendet (Schritt x), sodass - nach erfolgreicher Validierung - der Teilnehmer B damit den Betrag X1 erhält, was von den Daten 764' spezifiziert wird.
      Je nach Ausführungsform können bei diesen Überweisungen Gebühren anfallen, die von dem Betrag X1 durch einen der Transaktionsserver 708 und/oder den Servercomputer 700 abgezogen werden, sodass nicht der volle Betrag X1 bei dem Teilnehmer B ankommt.
      Es kann jedoch auch sein, dass der Teilnehmer B aus technischen Gründen die SMS 810 nicht empfangen kann oder keine Installation der Wallet-App wünscht, weil er nicht in das Netzwerk der Kryptowährung aufgenommen werden möchte, und/oder weil er den Betrag nicht annehmen möchte. Für diesen Fall ist Folgendes vorgesehen:
         Durch Senden der SMS 810 wird der Timer 798 von dem Programmmodul 796 gestartet. Erfolgt vor Ablauf des Timers kein Empfang der Nachricht 812 durch den Servercomputer 700, so wird der Registrierungsvorgang für den Teilnehmer B abgebrochen und der Transaktionsgenerator 790 erzeugt eine weitere Transaktionsnachricht 818, um den in der Datenbank 808 für den Nutzer A gespeicherten Betrag X1 wieder an den Teilnehmer A zurückzuüberweisen. Hierzu verwendet der Transaktionsgenerator 790 die nächste Adresse A1 aus dem Pufferspeicher 782. Diese Transaktionsnachricht 818 wird wiederum als Broadcast übertragen und dem Teilnehmer A nach entsprechender Validierung gutgeschrieben, indem die Daten 764 dementsprechend aktualisiert werden.

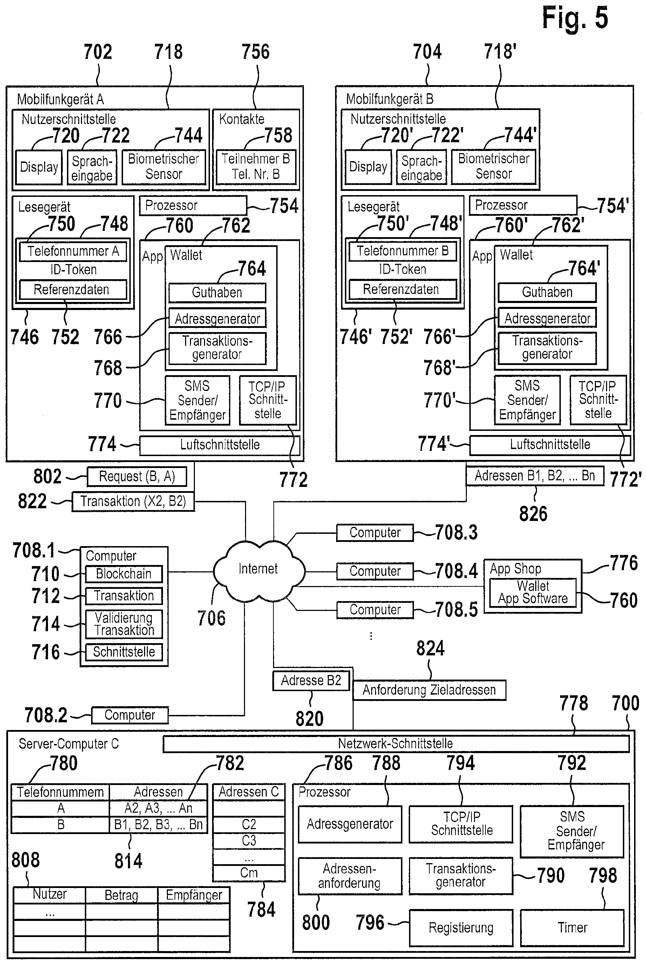

Die Figur 5 zeigt das Datenverarbeitungssystem der Figur 4 nachdem der Betrag X1 erfolgreich an den Teilnehmer B überwiesen worden ist, weil der Teilnehmer seiner Registrierung durch Installation der Wallet-App 760' zugestimmt hat. Im Weiteren kann beispielsweise der Teilnehmer A weitere Überweisungen an den Teilnehmer B tätigen, ohne dass der Servercomputer 700 als Treuhänder fungieren muss, das heißt, die Überweisung kann unmittelbar von dem Teilnehmer A an den Teilnehmer B erfolgen.

Hierzu sendet das Mobilfunkgerät 702 zunächst wiederum die Nachricht 802 analog zu dem oben genannten Schritt a). Der Servercomputer 700 führt dann wiederum die Datenbankabfrage der Registrierungsdatenbank 780 durch, analog zu dem obigen Schritt b). In dem hier betrachteten Fall führt die Datenbankabfrage zu einem Treffer, da tatsächlich die Telefonnummer B in der Registrierungsdatenbank 780 gespeichert ist.

Der Servercomputer 700 antwortet in diesem Fall auf die Nachricht 802 mit der Antwort 820, die die nächste noch nicht verwendete Zieladresse des Teilnehmers B, das heißt die Zieladresse B2, beinhaltet, um diese über das Internet 706 an das Mobilfunkgerät 702 zu kommunizieren. Zur Überweisung eines Betrags X2 von dem Teilnehmer A an den Teilnehmer B erzeugt nun der Transaktionsgenerator 760 eine Transaktionsnachricht 822, die den Betrag X2 und die Zieladresse B2 beinhaltet. Aufgrund einer Validierung dieser Transaktion durch einen der Transaktionsserver 708 wird dann dieser Betrag X2 unmittelbar an das Mobilfunkgerät 704 überwiesen, sodass die Daten 764' ein entsprechendes Guthaben X2 spezifizieren, gegebenenfalls abzüglich einer Servicegebühr.

Wenn aufgrund einer größeren Anzahl von aufeinanderfolgenden Überweisungen von dem Teilnehmer A oder anderen Teilnehmern an den Teilnehmer B die Anzahl der noch unbenutzten Adressen in dem Pufferspeicher 814 zur Neige geht, das heißt einen vorgegebenen Schwellwert unterschreitet, so wird durch das Programmmodul 800 eine Nachricht 824 generiert, um neue Zieladressen von der Wallet-App 760' des Mobilfunkgeräts 704 anzufordern. Die Wallet-App 760' verwendet daraufhin den Adressgenerator 766' zur Erzeugung von beispielsweise n weiteren Adressen, die als Antwort 826 auf die Nachricht 824 an den Servercomputer 700 gesendet und in dem Pufferspeicher 814 gespeichert werden.

Dieser Prozess des Auffüllens des Pufferspeichers 814 mit noch nicht verwendeten Zieladressen des Teilnehmers B kann asynchron zu der Verarbeitung von Transaktionsnachrichten erfolgen. Entsprechendes gilt für die Auffüllung des Pufferspeichers 782 für Zieladressen des Teilnehmers A sowie für die Auffüllung des Pufferspeichers 784 für die Zieladressen des Teilnehmers C, das heißt des Servercomputers 700.

Dadurch, dass die Benachrichtung des Teilnehmers B hinsichtlich der erforderlichen Registrierung über die SMS 810 erfolgt, ist zugleich sichergestellt, dass die Nachricht tatsächlich an den Teilnehmer B gelangt, da beispielsweise eine sogenannte Man-in-the-Middle-Attack bei einer SMS kaum durchführbar ist.

### Bezugszeichenliste

- 100: Datenverarbeitungssystem
- 102: Wurzelzertifizierungsinstanz
- 104: Wurzelzertifikat
- 110: Unterzertifizierungsinstnaz
- 112: Unterzertifikat
- 114: Transaktionsserver
- 116: Serverzertifikat
- 118: Transaktionsprogramm-Zertifikat
- 120: Unterzertifizierungsinstanz
- 122: Unterzertifikat
- 124: Wallet
- 126: Walletzertifikat
- 128: Walletprogramm-Zertifikat
- 130: Währungserzeugungsinstanz
- 132: Währungserzeugungszertifikat
- 134: Instanzzertifikat
- 200: Datenverarbeitungssystem
- 201: Walletcomputer
- 202: Kommunikationsschnittstelle
- 204: Prozessor
- 206: Nutzerschnittstelle
- 208: Display
- 210: Tastatur
- 212: Speicher
- 214: Walletprogramm
- 216: Transaktionsgenerator
- 218: Adressen
- 220: Schlüsselpaar
- 222: Walletprogramm-Zertifikat
- 224: Transaktion
- 226: Blockchain
- 228: Sicherheitsmodul
- 230: Prüfungsprogramm
- 232: Schlüsselpaar
- 234: Sicherheitsmodul-Zertifikat
- 236: Anfrage
- 238: Schlüsselpaar
- 240: Walletzertifikat
- 242: Anfragegenerator
- 300: Transaktionsserver
- 302: Kommunikationsschnittstelle
- 304: Prozessor
- 312: Speicher
- 314: Transaktionsprogramm
- 316: Blockgenerator
- 320: Schlüsselpaar
- 322: Transaktionsprogramm-Zertifikat
- 328: Sicherheitsmodul
- 330: Prüfungsprogramm
- 332: Schlüsselpaar
- 334: Sicherheitsmodul-Zertifikat
- 338: Schlüsselpaar
- 340: Serverzertifikat
- 400: Währungsinstanz
- 402: Kommunikationsschnittstelle
- 404: Prozessor
- 412: Speicher
- 414: Währungserzeugungsprogramm
- 416: Blockgenerator
- 420: Schlüsselpaar
- 422: Währungserzeugungs-Zertifikat
- 428: Sicherheitsmodul
- 430: Prüfprogramm
- 432: Schlüsselpaar
- 434: Sicherheitsmodul-Zertifikat
- 438: Schlüsselpaar
- 440: Instanz-Zertifikat
- 500: Netzwerk
- 502: Sperrinstanz
- 504: Kommunikationsschnittstelle
- 506: Prozessor
- 510: Speicher
- 512: Sperrgenerator
- 514: Sperrliste
- 600: Datenverarbeitungssystem
- 602: Nutzer
- 604: Endgerät
- 606: Walletprogramm
- 612: Nutzer
- 614: Endgerät
- 616: Walletprogramm
- 620: Transaktionsserver
- 622: Transaktionsprogramm
- 630: Tauschbörse
- 632: Tauschbörsenserver
- 634: Walletprogramm
- 640: Geschäft
- 642: Geschäfts-Dienstserver
- 644: Walletprogramm
- 650: Währungserzeugungsinstanz
- 652: Währungserzeugungsprogramm
- 700: Servercomputer
- 702: Mobilfunkgerät
- 704: Mobilfunkgerät
- 706: Internet
- 708: Mining Nodes
- 710: Blockchain
- 712: Transaktion
- 714: Programmmodul (Validierung Transaktion)
- 716: Kommunikationsschnittstelle
- 718: Nutzerschnittstelle
- 720: Display
- 722: Spracheingabemodul
- 744: biometrischer Sensor
- 746: Lesegerät
- 748: ID-Token
- 750: Speicherbereich
- 752: Speicherbereich
- 754: Prozessor
- 756: Anwendungsprogramm (Kontakte)
- 758: Kontakt
- 760: Wallet-App
- 762: Wallet
- 764: Daten (Guthaben)
- 766: Adressgenerator
- 768: Transaktionsgenerator
- 770: Schnittstelle (SMS)
- 772: Schnittstelle(TCP/IP)
- 774: Luftschnittstelle
- 776: App-Shop
- 778: Netzwerkschnittstelle
- 780: Registrierungsdatenbank
- 782: Pufferspeicher
- 784: Pufferspeicher
- 786: Prozessor
- 788: Adressgenerator
- 790: Transaktionsgenerator
- 792: Modul
- 794: Modul
- 796: Programmmodul
- 798: Timer
- 800: Programmmodul
- 802: Nachricht
- 804: Antwort
- 806: Transaktionsnachricht
- 808: Transaktionsdatenbank
- 810: SMS
- 812: Nachricht
- 814: Puffer
- 816: Transaktionsnachricht
- 818: Transaktionsnachricht
- 820: Antwort
- 822: Transaktionsnachricht
- 824: Nachricht
- 826: Antwort

## Patentansprüche

1. Elektronisches Verfahren zur kryptographisch gesicherten Überweisung eines Betrags einer Kryptowährung durch eine Transaktion des Betrags von einer einem ersten Client (124, 201, 604) zugeordneten Ausgangsadresse auf eine einem zweiten Client (124, 201', 614) zugeordnete Zieladresse,
wobei eine Mehrzahl von Clients vorgesehen ist, welche zumindest den ersten und den zweiten Client umfasst, wobei auf den Clients jeweils ein Walletprogramm (214, 606; 214',616) zur Realisierung eines Client-Nodes der Kryptowährung installiert ist, wobei die Walletprogramme jeweils dazu konfiguriert sind asymmetrische kryptographische Walletschlüsselpaare (218, 218') zu erzeugen, zu speichern und zu verwalten, Transaktionsnachrichten zur Überweisung von Beträgen der Kryptowährung zu erzeugen und eine Blockchain (226) der Überweisungshistorie der Kryptowährung zu prüfen, wobei die Ausgangsadresse einem ersten kryptographischen Walletschlüsselpaar des ersten Walletprogramms des ersten Clients zugeordnet ist und die Zieladresse einem zweiten kryptographische Walletschlüsselpaar des zweiten Walletprogramms des zweiten Clients zugeordnet ist,
wobei ein Transaktionsserver (114, 300, 620) vorgesehen ist, auf dem ein Transaktionsprogramm (314, 622) zur Realisierung eines Server-Nodes der Kryptowährung installiert ist, wobei das Transaktionsprogramm dazu konfiguriert ist Blöcke der Blockchain mit Transaktionsdaten zu erzeugen, wobei der Transaktionsserver einen privaten und einen öffentlichen Serverschlüssel eines asymmetrischen Serverschlüsselpaars (338) umfasst, und wobei der Transaktionsserver ein Serverzertifikat (116, 334) einer hierarchischen PKI (100) mit einer zentralen Wurzelzertifizierungsinstanz (102) umfasst, welches dazu konfiguriert ist als Nachweis der Authentizität des öffentlichen Serverschlüssels und der Berechtigung des Transaktionsservers zum Erzeugen von Blöcken der Blockchain zu dienen,
wobei es sich bei dem Serverzertifikat (116, 334) um ein Serverzertifikat einer begrenzten Anzahl von Serverzertifikaten zum Begrenzen einer Anzahl von bereitgestellten Transaktionsservern handelt, wobei die maximale Anzahl der bereitgestellten Transaktionsserver festgelegt ist, und zwar in Abhängigkeit von der durchschnittlichen Anzahl an Transaktionsnachrichten über einen vordefinierten Zeitraum,
wobei das Verfahren umfasst:
• Empfangen von Transaktionsnachrichten der Client-Nodes durch den Transaktionsserver, wobei eine der Transaktionsnachrichten von dem ersten Client stammt und eine Transaktion (224) des Betrags von der Ausgangsadresse auf die Zieladresse umfasst,
• Prüfen der Gültigkeit der Transaktionsnachrichten durch den Transaktionsserver,
• Erzeugen eines Blocks für die Blockchain durch den Transaktionsserver, wobei der erzeugte Block empfangene Transaktionsnachrichten umfasst, deren Gültigkeit durch den Transaktionsserver bestätigt wurde,
• Signieren des Blocks mit dem geheimen privaten Serverschlüssel,
• Bereitstellen des Serverzertifikats für die Client-Nodes zum Überprüfen der Gültigkeit des erzeugten Blocks der Blockchain, wobei der erzeugte Block ferner ein vordefiniertes Merkmal erfüllen muss, um gültig zu sein, und wobei durch Wahl des entsprechenden Merkmals der Schwierigkeitsgrad für die Erzeugung eines gültigen Blocks gesteuert wird.

2. Elektronisches Verfahren nach Anspruch 1, wobei das Transaktionsprogramm zum Nachweis seiner Authentizität eine Signatur aufweist, wobei ein Transaktionsprogramm-Zertifikat (118, 322) der hierarchischen PKI zum Nachweis der Authentizität der Signatur des Transaktionsprogramm bereitgestellt wird, wobei der Transaktionsserver ein erstes Sicherheitsmodul (328) aufweist, welches gegen Manipulationen gesichert ist, wobei das erste Sicherheitsmodul dazu konfiguriert ist:
• einen Hashwert des Transaktionsprogramms zu berechnen,
• die Korrektheit des berechneten Hashwerts durch Abgleich mit der Signatur des Transaktionsprogramms unter Verwendung des Transaktionsprogramm-Zertifikats zu prüfen, und
• im Falle einer Abweichung des berechneten Hashwerts von dem der Signatur des Transaktionsprogramms zugrundeliegenden Hashwerts, die Erzeugung von gültigen Blöcken der Blockchain durch den Transaktionsserver zu blockieren.

3. Elektronisches Verfahren nach einem der Ansprüche 1 bis 2, wobei die Walletprogramme zum Nachweis ihrer Authentizität jeweils eine Signatur aufweisen, wobei für jedes Walletprogramm ein Walletprogramm-Zertifikat (128, 222, 222`) der hierarchischen PKI zum Nachweis der Authentizität der Signatur des jeweiligen Walletprogramms bereitgestellt wird, und wobei der Client des jeweiligen Walletprogramms ein zweites Sicherheitsmodul (228,228') aufweist, welches gegen Manipulationen gesichert ist, wobei das zweite Sicherheitsmodul dazu konfiguriert ist:
• einen Hashwert des Walletprogramms zu berechnen,
• die Korrektheit des berechneten Hashwerts durch Abgleich mit der Signatur des Walletprogramms unter Verwendung des Walletprogramm-Zertifikats zu prüfen,
• im Falle einer Abweichung des berechneten Hashwerts von dem der Signatur des Walletprogramms zugrundeliegenden Hashwerts, die Erzeugung von gültigen Transaktionsnachrichten durch den jeweiligen Client zu blockieren.

4. Elektronisches Verfahren nach einem der Ansprüche 2 bis 3, wobei das erste Sicherheitsmodul einen ersten privaten und einen ersten öffentlichen Sicherheitsmodulschlüssel eines ersten asymmetrischen Sicherheitsmodulschlüsselpaars (332) umfasst, wobei das erste Sicherheitsmodul ein erstes Sicherheitsmodul-Zertifikat (334) der hierarchischen PKI umfasst, welches dazu konfiguriert ist als Nachweis der Authentizität des ersten öffentlichen Sicherheitsmodulschlüssels zu dienen, und wobei das erste Sicherheitsmodul dazu konfiguriert ist, bei der Herstellung einer Verbindung zu einem der Walletprogramme den Hashwert des Transaktionsprogramms zur Authentifizierung gegenüber dem Walletprogramme durch eine Signatur mit dem ersten privaten Sicherheitsmodulschlüssel zu bestätigen, und /oder
wobei die zweiten Sicherheitsmodule jeweils einen zweiten privaten und einen zweiten öffentlichen Sicherheitsmodulschlüssel eines zweiten asymmetrischen Sicherheitsmodulschlüsselpaars (232, 232') umfasst, wobei das zweite Sicherheitsmodul ein zweites Sicherheitsmodul-Zertifikat (234, 234') der hierarchischen PKI umfasst, welches dazu konfiguriert ist als Nachweis der Authentizität des zweiten öffentlichen Sicherheitsmodulschlüssels zu dienen, und wobei das zweite Sicherheitsmodul dazu konfiguriert ist bei der Herstellung einer Verbindung zu dem Transaktionsprogramm den Hashwert des Walletprogramms zur Authentifizierung gegenüber dem Transaktionsprogramm durch eine Signatur mit dem zweiten privaten Sicherheitsmodulschlüssel zu bestätigen.

5. Elektronisches Verfahren nach einem der Ansprüche 1 bis 4, wobei eine Währungserzeugungsinstanz (130, 400, 650) vorgesehen ist, auf welcher ein Währungserzeugungsprogramm (414) zur Erzeugung neuer Beträgen der Kryptowährung vorgesehen ist, wobei das Währungserzeugungsprogramm dazu konfiguriert ist Blöcke der Blockchain zu erzeugen, welche eine Währungserzeugungstransaktion umfassen, wobei die Währungserzeugungsinstanz einen privaten und einen öffentlichen Währungserzeugungsschlüssel eines asymmetrischen Währungserzeugungsschlüsselpaars (420) umfasst, und wobei die Währungserzeugungsinstanz ein Währungserzeugungszertifikat (132, 422) der hierarchischen PKI umfasst, welches dazu konfiguriert ist als Nachweis der Authentizität des öffentlichen Währungserzeugungsschlüssels und der Berechtigung der Währungserzeugungsinstanz zum Erzeugen von Blöcken der Blockchain mit Währungserzeugungstransaktionen zu dienen,
wobei das Verfahren ferner umfasst:
• Erzeugen eines Blocks für die Blockchain durch die Währungserzeugungsinstanz, welcher eine Währungserzeugungstransaktion umfasst,
• Signieren des Blocks mit dem geheimen privaten Währungserzeugungsschlüssel,
• Bereitstellen des Währungserzeugungszertifikats für die Client-Nodes zum Überprüfen der Gültigkeit des erzeugten Blocks der Blockchain.

6. Elektronisches Verfahren nach Anspruch 5, wobei die Währungserzeugungsinstanz den Block mit der Währungserzeugungstransaktion auf Anfrage des Clients hin erzeugt,
wobei das Verfahren vor Erzeugung des entsprechenden Blocks der Blockchain umfasst:
• Empfangen einer Währungserzeugungsnachricht von einem der Client-Nodes, wobei die Währungserzeugungsnachricht den zu erzeugenden Betrag der Kryptowährung sowie eine Zieladresse für den zu erzeugenden Betrag angibt,
• Prüfen der Gültigkeit der Währungserzeugungsnachricht durch die Währungserzeugungsinstanz.

7. Elektronisches Verfahren nach einem der Ansprüche 5 bis 6, wobei das Währungserzeugungsprogramm zum Nachweis seiner Authentizität eine Signatur aufweist, wobei ein Währungserzeugungsprogramm-Zertifikat der hierarchischen PKI zum Nachweis der Authentizität der Signatur des Währungserzeugungsprogramm bereitgestellt wird, wobei die Währungserzeugungsinstanz ein drittes Sicherheitsmodul (428) aufweist, welches gegen Manipulationen gesichert, und wobei das dritte Sicherheitsmodul dazu konfiguriert ist:
• einen Hashwert des Währungserzeugungsprogramms zu berechnen,
• die Korrektheit des berechneten Hashwerts durch Abgleich mit der Signatur des Währungserzeugungsprogramms unter Verwendung des Währungserzeugungsprogramm-Zertifikats zu prüfen,
• im Falle einer Abweichung des berechneten Hashwerts von dem der Signatur des Währungserzeugungsprogramms zugrundeliegenden Hashwerts, die Erzeugung von Blöcken der Blockchain durch die Währungserzeugungsinstanz zu blockieren.

8. Elektronisches Verfahren nach Anspruch 7, wobei das dritte Sicherheitsmodul einen dritten privaten und einen dritten öffentlichen Sicherheitsmodulschlüssel eines dritten asymmetrischen Sicherheitsmodulschlüsselpaars (432) umfasst, wobei das dritte Sicherheitsmodul ein drittes Sicherheitsmodul-Zertifikat (434) der hierarchischen PKI umfasst, welches dazu konfiguriert ist als Nachweis der Authentizität des dritten öffentlichen Sicherheitsmodulschlüssels zu dienen, wobei das dritte Sicherheitsmodul dazu konfiguriert ist, bei der Herstellung einer Verbindung zu einem der Walletprogramm den Hashwert des Währungserzeugungsprogramms zur Authentifizierung gegenüber dem Walletprogramm durch eine Signatur mit dem dritten privaten Sicherheitsmodulschlüssel zu bestätigen, und
wobei die zweiten Sicherheitsmodule dazu konfiguriert sind:
• die Korrektheit des signierten Hashwerts des Währungserzeugungsprogramms durch Abgleich mit der Signatur des Währungserzeugungsprogramms unter Verwendung des Währungserzeugungsprogramm-Zertifikats zu prüfen,
• im Falle einer Abweichung von der Signatur des Währungserzeugungsprogramms, den Verbindungsaufbau zu der Währungserzeugungsinstanz abzubrechen.

9. Elektronisches Verfahren nach einem der Ansprüche 1 bis 8, wobei der erste Transaktionsserver den privaten Serverschlüssel zum Signieren von Nachrichten verwendet und/oder wobei der erste Client einen privaten und einen öffentlichen Clientschlüssel eines asymmetrischen Clientschlüsselpaars (238) umfasst, und wobei der Client ein Clientzertifikat (126, 240) der hierarchischen PKI umfasst, welches dazu konfiguriert ist als Nachweis der Authentizität des öffentlichen Clientschlüssels zu dienen, und wobei der erste Client den privaten Clientschlüssel zum Signieren von Nachrichten verwendet, und/oder wobei die Währungserzeugungsinstanz einen privaten und einen öffentlichen Währungserzeugungsinstanz-Schlüssel eines asymmetrischen Währungserzeugungsinstanz-Schlüsselpaars (438) umfasst, und wobei die Währungserzeugungsinstanz ein Währungserzeugungsinstanz-Zertifikat (440) der hierarchischen PKI umfasst, welches dazu konfiguriert ist als Nachweis der Authentizität des öffentlichen Währungserzeugungsinstanz-Schlüssels zu dienen, und wobei die Währungserzeugungsinstanz den privaten Währungserzeugungsinstanz-Schlüssel zum Signieren von Nachrichten verwendet.

10. Elektronisches Verfahren nach einem der Ansprüche 1 bis 9, wobei es sich bei dem ersten Client um ein ersten Mobilfunkgerät (702) eines ersten Teilnehmers handelt und bei dem zweiten Client um an ein zweites Mobilfunkgerät (704) eines zweiten Teilnehmers, wobei der Betrag (X1) der Kryptowährung über das Internet (706) überweisen wird, wobei dem ersten Mobilfunkgerät eine erste Telefonnummer und dem zweiten Mobilfunkgerät eine zweite Telefonnummer zugeordnet ist, und das erste und zweite Mobilfunkgerät jeweils eine Netzwerkschnittstelle (770, 774) zu einem digitalen zellularen Mobilfunknetzwerk haben, wobei für Überweisungen der Kryptowährung Zieladressen benutzt werden, die nur einmal verwendet werden, der Transaktionsserver (708) an das Internet angeschlossen ist, wobei die Überweisung mittels eines an das Internet angeschlossenen Servercomputers (700), durch den ein weiterer Client-Node der Kryptowährung gebildet wird, erfolgt, wobei der Servercomputer Zugriff auf eine Registrierungsdatenbank (780) hat, in der Telefonnummern von registrierten Teilnehmern gespeichert sind,
wobei das Verfahren ferner umfasst:
a) Senden einer Nachricht (802) von dem ersten Mobilfunkgerät an den Servercomputer über das Internet, wobei die Nachricht die erste und die zweite Telefonnummer beinhaltet,
b) Durchführung einer Datenbankabfrage der Registrierungsdatenbank mit der zweiten Telefonnummer als Zugriffsschlüssel durch den Servercomputer, um zu prüfen, ob der zweite Teilnehmer bereits registriert ist,
c) in dem Fall, dass der zweite Teilnehmer nicht registriert ist:
i. Senden einer Zieladresse (804) des Servercomputers von dem Servercomputer an das erste Mobilfunkgerät,
ii. Erzeugung einer Transaktionsnachricht (806) durch das erste Mobilfunkgerät, wobei die Transaktionsnachricht den zu überweisenden Betrag und die Zieladresse des Servercomputers beinhaltet,
iii. Senden der Transaktionsnachricht durch das erste Mobilfunkgerät an den Transaktionsserver über das Internet,
iv. Validierung der Transaktionsnachricht durch den Transaktionsserver mithilfe der Blockchain,
v. Senden einer Nachricht (810) von dem Servercomputer an das zweite Mobilfunkgerät über einen Signalisierungslayer des Mobilfunknetzwerks, um den zweiten Teilnehmer zur Registrierung aufzufordern,
vi. Installation des Walletprogramms (760') auf dem zweiten Mobilfunkgerät zur Realisierung eines weiteren Client-Nodes der Kryptowährung,
vii. Erzeugung einer Zieladresse des zweiten Mobilfunkgeräts durch das auf dem zweiten Mobilfunkgerät installierte Walletprogramm,
viii. Senden der Zieladresse (812) des zweiten Mobilfunkgeräts von dem zweiten Mobilfunkgerät an den Servercomputer,
ix. Erzeugung einer weiteren Transaktionsnachricht (816) durch den Servercomputer, wobei die weitere Transaktionsnachricht den Betrag und die Zieladresse des zweiten Mobilfunkgeräts beinhaltet, und Senden der weiteren Transaktionsnachricht durch den Servercomputer an den Transaktionsserver über das Internet,
x. Validierung der weiteren Transaktionsnachricht durch den Transaktionsserver mithilfe der Blockchain,
d) für den Fall, dass der zweite Teilnehmer bereits registriert ist:
i. Senden einer Zieladresse (820) des zweiten Mobilfunkgeräts von dem Servercomputer an das erste Mobilfunkgerät, wobei der Servercomputer auf die Zieladresse des zweiten Mobilfunkgeräts mit Hilfe der zweiten Telefonnummer als Zugriffschlüssel zugreift,
ii. Erzeugung einer Transaktionsnachricht (822) durch das erste Mobilfunkgerät, wobei die Transaktionsnachricht den Betrag und die Zieladresse des zweiten Mobilfunkgeräts beinhaltet,
iii. Senden der Transaktionsnachricht durch das erste Mobilfunkgerät an den Transaktionsserver über das Internet,
iv. Validierung der Transaktionsnachricht durch den Transaktionsserver mithilfe der Blockchain.

11. Servercomputersystem, welches als Transaktionsserver im Verfahren nach einem der Ansprüche 1 bis 10 konfiguriert ist.

12. Servercomputer, welcher als Servercomputer im Verfahren nach Anspruch 10 konfiguriert ist.

13. Clientcomputersystem, welches als Client im Verfahren nach einem der Ansprüche 1 bis 10 konfiguriert ist.

14. Computersystem, welches als Währungserzeugungsinstanz im Verfahren nach Anspruch 10 konfiguriert ist.

15. Datenverarbeitungssystem (200) mit einem Servercomputersystem nach Anspruch 11 und zumindest einem ersten und einem zweiten Clientcomputersystem nach Anspruch 13, wobei das Datenverarbeitungssystem vorzugsweise ferner ein Computersystem nach Anspruch 14 umfasst und/oder wobei das Datenverarbeitungssystem vorzugsweise ferner einen Servercomputer nach Anspruch 12 umfasst.

## Claims

1. An electronic method for the cryptographically secure transfer of a cryptocurrency amount by means of a transaction of the amount from a starting address assigned to a first client (124, 201, 604) to a target address assigned to a second client (124, 201', 614),
wherein a plurality of clients is provided, comprising at least the first and the second client, wherein a wallet program (214, 606; 214', 616) for providing a client node of the cryptocurrency is installed on each client, wherein the wallet programs are each configured to generate, to store, and to manage asymmetric cryptographic wallet key pairs (218, 218'), to generate transaction messages for the transfer of cryptocurrency amounts, and to check a blockchain (226) of the cryptocurrency transfer history, wherein the starting address is assigned to a first cryptographic wallet key pair of the first wallet program of the first client and the target address is assigned to a second cryptographic wallet key pair of the second wallet program of the second client,
wherein a transaction server (114, 300, 620) is provided, on which a transaction program (314, 622) for providing a server node of the cryptocurrency is installed, wherein the transaction program is configured to generate blocks of the blockchain with transaction data, wherein the transaction server comprises a private and a public server key of an asymmetric server key pair (338), and wherein the transaction server comprises a server certificate (116, 334) of a hierarchical PKI (100) with a central root certification entity (102) which is configured to serve as proof of the authenticity of the public server key and of the authorisation of the transaction server for generating blocks of the block chain,
wherein the server certificate (116, 334) is a server certificate of a limited number of server certificates for limiting a number of provided transaction servers, wherein the maximum number of provided transaction servers is defined, more specifically in dependence on the average number of transaction messages over a predefined time period,
wherein the method comprises:
• receiving transaction messages of the client nodes by the transaction server, wherein one of the transaction messages originates from the first client and comprises a transaction (224) of the amount from the starting address to the target address,
• checking the validity of the transaction messages by the transaction server,
• generating a block for the blockchain by the transaction server, wherein the generated block comprises received transaction messages, the validity of which has been confirmed by the transaction server,
• signing the block with the secret private server key,
• providing the server certificate for the client nodes to check the validity of the generated block of the blockchain, wherein the generated block must also satisfy a predefined feature in order to be valid, and wherein the degree of difficulty for the generation of a valid block is controlled by selection of the corresponding feature.

2. The electronic method according to claim 1, wherein the transaction program has a signature for proving its authenticity, wherein a transaction program certificate (118, 322) of the hierarchical PKI is provided to prove the authenticity of the signature of the transaction program, wherein the transaction server has a first security module (328), which is secured against manipulation, wherein the first security module is configured:
• to calculate a hash value of the transaction program,
• to check the correctness of the calculated hash value by comparison with the signature of the transaction program using the transaction program certificate, and
• in the case of a deviation of the calculated hash value from the hash value forming the basis of the signature of the transaction program, to block the generation of valid blocks of the blockchain by the transaction server.

3. The electronic method according to any one of claims 1 to 2, wherein the wallet programs each have a signature to prove their authenticity, wherein, for each wallet program, a wallet program certificate (128, 222, 222') of the hierarchical PKI for proving the authenticity of the signature of the respective wallet program is provided, and wherein the client of the respective wallet program has a second security module (228, 228'), which is secured against manipulation, wherein the second security module is configured:
• to calculate a hash value of the wallet program,
• to check the correctness of the calculated hash value by comparison with the signature of the wallet program using the wallet program certificate, and
• in the case of a deviation of the calculated hash value from the hash value forming the basis of the signature of the wallet program, to block the generation of valid transaction messages by the respective client.

4. The electronic method according to either one of claims 2 to 3, wherein the first security module comprises a first private and a first public security module key of a first asymmetric security module key pair (332), wherein the first security module comprises a first security module certificate (334) of the hierarchical PKI, which is configured to serve as proof of the authenticity of the first public security module key, and wherein the first security module is configured, during establishment of a connection to one of the wallet programs, to confirm the hash value of the transaction program for authentication to the wallet programs by a signature with the first private security module key, and/or
wherein the second security modules each comprise a second private and a second public security module key of a second asymmetric security module key pair (232, 232'), wherein the second security module comprises a second security module certificate (234, 234') of the hierarchical PKI which is configured to serve as proof of the authenticity of the second public security module key, and wherein the second security module is configured, during establishment of a connection to the transaction program, to confirm the hash value of the wallet program for authentication to the transaction program by a signature with the second private security module key.

5. The electronic method according to any one of claims 1 to 4, wherein a currency generation entity (130, 400, 650) is provided, on which there is provided a currency generation program (414) for generating new cryptocurrency amounts, wherein the currency generation program is configured to generate blocks of the blockchain which comprise a currency generation transaction, wherein the currency generation entity comprises a private and a public currency generation key of an asymmetric currency generation key pair (420), and wherein the currency generation entity comprises a currency generation certificate (132, 422) of the hierarchical PKI which is configured to serve as proof of the authenticity of the public currency generation key and of the authorisation of the currency generation entity for generating blocks of the blockchain with currency generation transactions,
wherein the method further comprises:
• generating a block for the blockchain by the currency generation entity which comprises a currency generation transaction,
• signing the block with the secret private currency generation key,
• providing the currency generation certificate for the client nodes for checking the validity of the generated block of the blockchain.

6. The electronic method according to claim 5, wherein the currency generation entity generates the block with the currency generation transaction on request of the client,
wherein the method for generating the corresponding block of the blockchain comprises:
• receiving a currency generation message from one of the client nodes, wherein the currency generation message specifies the cryptocurrency amount to be generated and also a target address for the amount to be generated,
• checking the validity of the currency generation message by the currency generation entity.

7. The electronic method according to any one of claims 5 to 6, wherein the currency generation program has a signature for proving its authenticity, wherein a currency generation program certificate of the hierarchical PKI is provided for proving the authenticity of the signature of the currency generation program, wherein the currency generation entity has a third security module (428) which is secured against manipulation, and wherein the third security module is configured:
• to calculate a hash value of the currency generation program,
• to check the correctness of the calculated hash value by comparison with the signature of the currency generation program using the currency generation program certificate, and
• in the case of a deviation of the calculated hash value from the hash value forming the basis of the signature of the currency generation program, to block the generation of blocks of the blockchain by the currency generation entity.

8. The electronic method according to claim 7, wherein the third security module comprises a third private and a third public security module key of a third asymmetric security module key pair (432), wherein the third security module comprises a third security module certificate (434) of the hierarchical PKI which is configured to serve as proof of the authenticity of the third public security module key, wherein the third security module is configured, during establishment of a connection to one of the wallet programs, to confirm the hash value of the currency generation program for authentication to the wallet program by a signature with the first private security module key, and
wherein the second security modules are configured:
• to check the correctness of the signed hash value of the currency generation program by comparison with the signature of the currency generation program using the currency generation program certificate, and
• in the case of a deviation from the signature of the currency generation program, to cancel the establishment of a connection to the currency generation entity.

9. The electronic method according to any one of claims 1 to 8, wherein the first transaction server uses the private server key to sign messages, and/or wherein the first client comprises a private and a public client key of an asymmetric client key pair (238), and wherein the client comprises a client certificate (126, 240) of the hierarchical PKI which is configured to serve as proof of the authenticity of the public client key, and wherein the first client uses the private client key to sign messages, and/or wherein the currency generation entity comprises a private and a public currency generation entity key of an asymmetric currency generation key pair (438), and wherein the currency generation entity comprises a currency generation entity certificate (440) of the hierarchical PKI which is configured to serve as proof of the authenticity of the public currency generation entity key, and wherein the currency generation entity uses the private currency generation entity key to sign messages.

10. The electronic method according to any one of claims 1 to 9, wherein the first client is a mobile radio unit (702) of a first participant, and the second client is a second mobile radio unit (704) of a second participant, wherein the cryptocurrency amount (X1) is transferred over the Internet (706), wherein a first telephone number is assigned to the first mobile radio unit and a second telephone number is assigned to the second mobile radio unit, and the first and second mobile radio unit each have a network interface (770, 774) to a digital cellular mobile radio network, wherein target addresses are used for transfers of the cryptocurrency and are used only once, the transaction server (708) is connected to the Internet, wherein the transfer is performed by means of a server computer (700) which is connected to the Internet and by which a further client node of the cryptocurrency is formed, wherein the server computer has access to a registration database (780), in which telephone numbers of registered participants are stored,
wherein the method further comprises:
a) sending a message (802) from the first mobile radio unit to the server computer over the Internet, wherein the message includes the first and the second telephone number,
b) carrying out a database query of the registration database with the second telephone number as access key by the server computer in order to check whether the second participant is already registered,
c) in the event that the second participant is not registered:
i. sending a target address (804) of the server computer from the server computer to the first mobile radio unit,
ii. generating a transaction message (806) by the first mobile radio unit, wherein the transaction message contains the amount to be transferred and the target address of the server computer,
iii. sending the transaction message by the first mobile radio unit to the transaction server over the Internet,
iv. validating the transaction message by the transaction server with the aid of the blockchain,
v. sending a message (810) from the server computer to the second mobile radio unit via a signalling layer of the mobile radio network in order to invite the second participant to register,
vi. installing the wallet program (760') on the second mobile radio unit to provide a further client node of the cryptocurrency,
vii. generating a target address of the second mobile radio unit by the wallet program installed on the second mobile radio unit,
viii. sending the target address (812) of the second mobile radio unit from the second mobile radio unit to the server computer,
ix. generating a further transaction message (816) by the server computer, wherein the further transaction message contains the amount and the target address of the second mobile radio unit, and sending the further transaction message by the server computer to the transaction server over the Internet,
x. validating the further transaction message by the transaction server with the aid of the blockchain,
d) in the case that the second participant is already registered:
i. sending a target address (820) of the second mobile radio unit from the server computer to the first mobile radio unit, wherein the server computer accesses the target address of the second mobile radio unit with the aid of the second telephone number as access key,
ii. generating a transaction message (822) by the first mobile radio unit, wherein the transaction message contains the amount and the target address of the second mobile radio unit,
iii. sending the transaction message by the first mobile radio unit to the transaction server over the Internet,
iv. validating the transaction message by the transaction server with the aid of the blockchain.

11. A server computer system which is configured as transaction server in the method according to any one of claims 1 to 10.

12. A server computer which is configured as server computer in the method according to claim 10.

13. A client computer system which is configured as client in the method according to any one of claims 1 to 10.

14. A computer system which is configured as currency generation entity in the method according to claim 10.

15. A data processing system (200) comprising a server computer system according to claim 11 and at least one first and one second client computer system according to claim 13, wherein the data processing system preferably also comprises a computer system according to claim 14, and/or wherein the data processing system preferably also comprises a server computer according to claim 12.

## Revendications

1. Procédé électronique de virement sécurisé par voie cryptographique d'un montant d'une monnaie cryptographique par une transaction du montant à partir d'une adresse de départ associée à un premier client (124, 201, 604) vers une adresse cible associée à un deuxième client (124, 201', 614),
dans lequel une multiplicité de clients est prévue, laquelle comprend au moins les premier et deuxième clients, dans lequel, respectivement un programme portefeuille (214, 606 ; 214', 616) pour la réalisation d'un noeud de clients de la monnaie cryptographique est installé chez les clients, dans lequel les programmes portefeuilles sont respectivement conçus pour créer, pour enregistrer et gérer des paires de clés de portefeuille (218, 218') cryptographiques asymétriques, générer des informations de transaction pour le virement de montants de monnaie cryptographique et vérifier une chaine de blocs 6) de l'historique des virements de la monnaie cryptographique, dans lequel l'adresse de départ est associée à une première paire de clés de portefeuille cryptographique du premier programme portefeuille du premier client et l'adresse cible est associée à une deuxième paire de clés de portefeuille cryptographique du deuxième programme portefeuille du deuxième client,
dans lequel un serveur de transactions (114, 300, 620) est prévu, sur lequel un programme de transactions (314, 622) est installé pour la réalisation d'un noeud de serveur de la monnaie cryptographique, dans lequel le programme de transaction est conçu pour créer des blocs de la chaine de blocs avec des données de transaction, dans lequel le serveur de transactions comprend une clé de serveur privée et une clé de serveur publique d'une paire de clés de serveur asymétrique (338), et dans lequel le serveur de transaction comprend un certificat de serveur (116, 334) d'une infrastructure à clé publique, PKI, hiérarchique (100) avec une instance de certification racine (102) centrale, laquelle est conçue pour servir de preuve de l'authenticité de la clé de serveur publique et d'autorisation du serveur de transaction pour la génération de blocs de la chaine de blocs,
dans lequel, dans le cas du certificat de serveur (116, 334), il s'agit d'un certificat de serveur parmi un nombre limité de certificats de serveur pour la limitation d'un nombre de serveurs de transaction mis à disposition, dans lequel le nombre maximal des serveurs de transaction mis à disposition est fixé et en l'occurrence, en fonction du nombre moyen d'informations de transactions pendant un intervalle de temps prédéfini,
le procédé comprenant :
• la réception d'informations de transactions des noeuds clients par le serveur de transaction, où une des informations de transaction est originaire du premier client et comprend une transaction (224) du montant de l'adresse de départ vers l'adresse cible,
• la vérification de la validité des informations de transaction par le serveur de transactions,
• la création d'un bloc pour la chaine de blocs par le serveur de transaction, où le bloc créé comprend des informations de transaction reçues dont la validité a été confirmée par le serveur de transaction,
• la signature du bloc avec la clé de serveur privée secrète,
• la fourniture du certificat de serveur pour les noeuds de clients pour la vérification de la validité du bloc créé de la chaine de blocs, où le bloc créé doit en outre satisfaire à une caractéristique prédéfinie afin d'être valide, et dans lequel le niveau de difficulté pour la création d'un bloc valide est commandé par le choix de la caractéristique correspondante.

2. Procédé électronique selon la revendication 1, dans lequel le programme de transaction présente une signature pour preuve de son authenticité, dans lequel un certificat de programme de transaction (118, 322) de la PKI hiérarchique est mis à disposition pour l'information de l'authenticité de la signature du programme de transaction, dans lequel le serveur de transaction présente un premier module de sécurité (328), lequel est sécurisé contre des manipulations, où le premier module de sécurité est conçu :
• pour calculer une valeur de hachage du programme de transaction,
• pour vérifier l'exactitude de la valeur de hachage calculée par la comparaison avec la signature du programme de transaction moyennant l'emploi du certificat de programme de transaction, et
• dans le cas d'une déviation de la valeur de hachage calculée par rapport à la valeur de hachage servant de base à la signature du programme de transaction, pour bloquer la création de blocs valides de la chaine de blocs par le serveur de transaction.

3. Procédé électronique selon l'une des revendications 1 à 2, dans lequel les programmes portefeuilles présentent respectivement une signature pour preuve de leur authenticité, où, pour chaque programme portefeuille, un certificat de programme portefeuille (128, 222, 222') de la PKI hiérarchique est mis à disposition pour preuve de l'authenticité de la signature du programme portefeuille correspondant, et où le client du programme portefeuille respectif présente un deuxième module de sécurité (228, 228'), lequel est sécurisé vis-à-vis de manipulations, le deuxième module de sécurité étant conçu pour :
• calculer une valeur de hachage du programme portefeuille,
• vérifier l'exactitude de la valeur de hachage calculée par la comparaison avec la signature du programme portefeuille moyennant l'emploi du certificat de programme portefeuille,
• dans le cas d'une déviation de la valeur de hachage calculée par rapport à la valeur de hachage servant de base à la signature du programme portefeuille, bloquer la création d'informations de transaction valides par le client respectif.

4. Procédé électronique selon l'une des revendications 2 à 3, dans lequel le premier module de sécurité comprend une première clé privée et une première clé publique de module de sécurité d'une première paire de clés de module de sécurité (332) asymétrique, où le premier module de sécurité comprend un premier certificat de module de sécurité (334) de la PKI hiérarchique, lequel est conçu pour servir de preuve de l'authenticité de la première clé de module de sécurité publique, et où le premier module de sécurité est conçu, lors de l'établissement d'une connexion vers un des programmes portefeuilles, pour confirmer la valeur de hachage du programme de transaction pour l'authentification vis-à-vis du programme portefeuille par une signature avec la première clé de module de sécurité privée, et/ou
dans lequel le deuxième module de sécurité comprend respectivement une deuxième clé privée et une deuxième clé de module de sécurité publique d'une deuxième paire de lés de module de sécurité (232, 232') asymétrique, où le deuxième module de sécurité comprend un deuxième certificat de module de sécurité (234, 234') de la PKI hiérarchique, lequel est conçu pour servir de preuve d'authenticité de la deuxième clé de module de sécurité publique, et où le deuxième module de sécurité est conçu, lors de l'établissement de la connexion vers le programme de transaction, pour confirmer la valeur de hachage du programme portefeuille pour l'authentification vis-à-vis du programme de transaction par une signature avec la deuxième clé de module de sécurité privée.

5. Procédé électronique selon l'une des revendications 1 à 4, dans lequel une instance de création de devises (130, 400, 650) est prévue, sur laquelle est prévu un programme de création de devises (414) permettant la création de nouveaux montants de monnaie cryptographique, où le programme de création de devises est conçu pour générer des blocs de la chaîne de blocs, lesquels comprennent une transaction de création de devises, où l'instance de création de devises comprend une clé privée et une clé de création de devises publique d'une paire de clés de création de devises (420) asymétrique, et où l'instance de création de devises comprend un certificat de création de devises (132, 422) de la PKI hiérarchique, lequel est conçu pour servir de preuve d'authenticité de la clé de création de devises publique et d'habilitation de l'instance de création de devises pour la création de blocs de la chaine de blocs avec des transactions de création de devises,
le procédé comprenant en outre :
• la création d'un bloc pour la chaine de blocs par l'instance de création de devises, lequel comprend une transaction de création de devises,
• la signature du bloc avec la clé de création de devises privée secrète,
• la fourniture du certificat de création de devises pour les noeuds clients pour la vérification de la validité du bloc créé de la chaine de blocs.

6. Procédé électronique selon la revendication 5, dans lequel l'instance de création de devises crée le bloc avec la transaction de création de devises suite à une demande du client,
le procédé comprenant, avant la création du bloc correspondant de la chaine de blocs :
• la réception d'une information de création de devises à partir d'un des noeuds de client, où l'information de création de devises indique le montant de la monnaie cryptographique à créer ainsi qu'une adresse cible pour le montant à générer,
• la vérification de la validité de l'information de création de devises par l'instance de création de devises.

7. Procédé électronique selon l'une des revendications 5 à 6, dans lequel le programme de création de devises présente une signature pour preuve de son authenticité, dans lequel un certificat de programme de création de devises de la PKI hiérarchique est mis à disposition pour preuve de l'authenticité de la signature du programme de création de devises, dans lequel l'instance de création de devises présente un troisième module de sécurité (428), lequel protège contre des manipulations, et dans lequel le troisième module de sécurité est conçu pour :
• calculer une valeur de hachage du programme de création de devises,
• vérifier l'exactitude de la valeur de hachage calculée par la comparaison avec la signature du programme de création de devises moyennant l'emploi du certificat de programme de création de devises,
• dans le cas d'une déviation de la valeur de hachage calculée par rapport à la valeur de hachage servant de base à la signature du programme de création de devises, bloquer la création de blocs de la chaine de blocs par l'instance de création de devises.

8. Procédé électronique selon la revendication 7, dans lequel le troisième module de sécurité comprend une troisième clé privée et une troisième clé publique de module de sécurité d'une troisième paire de clés de module de sécurité (432) asymétrique, où le troisième module de sécurité comprend un troisième certificat de module de sécurité (434) de la PKI hiérarchique, lequel est conçu pour servir de preuve de l'authenticité de la troisième clé de module de sécurité publique, et où le troisième module de sécurité est conçu, lors de l'établissement d'une connexion vers un des programmes portefeuilles, pour confirmer la valeur de hachage du programme de création de devises pour l'authentification vis-à-vis du programme portefeuille par une signature avec la troisième clé de module de sécurité privée, et
dans lequel les deuxièmes modules de sécurité sont conçus pour :
• pour vérifier l'exactitude de la valeur de hachage signée du programme de création de devises par la comparaison avec la signature du programme de création de devises moyennant l'emploi du certificat de programme de création de devises,
• dans le cas d'une déviation par rapport à la signature du programme de création de devises, interrompre l'établissement de la connexion vers l'instance de création de devises.

9. Procédé électronique selon l'une des revendications 1 à 8, dans lequel le premier serveur de transaction emploie la clé de serveur privée pour la signature d'informations, et/ou dans lequel le premier client comprend une clé privée et une clé de client publique d'une paire de clés de client (238) asymétrique, et dans lequel le client comprend un certificat de client (126, 240) de la PKI hiérarchique, lequel est conçu pour servir de preuve d'authenticité de la clé de client publique, et dans lequel le premier client emploie la clé de client privée pour la signature d'informations, et/ou dans lequel l'instance de création de devises comprend une clé privée et une clé publique d'instance de création de devises d'une paire de clés d'instance de création de devises (438) asymétrique, et dans lequel l'instance de création de devises comprend un certificat d'instance de création de devises (440) de la PKI hiérarchique, lequel est conçu pour servir de preuve de l'authenticité de la clé d'instance de création de devises publique, et dans lequel l'instance de création de devises emploie la clé d'instance de création de devises privée pour la signature d'informations.

10. Procédé électronique selon l'une des revendications 1 à 9, dans lequel, dans le cas du premier client, il s'agit d'un premier appareil radio mobile (702) d'un premier participant et dans le cas du deuxième client, il s'agit d'un deuxième appareil radio mobile (704) d'un deuxième participant, dans lequel le montant (X1) de la monnaie cryptographique est transféré par internet (706), dans lequel un premier numéro de téléphone est associé au premier appareil radio mobile et un deuxième numéro de téléphone est associé au deuxième appareil radio mobile, et les premier et deuxième appareils radio mobiles ont respectivement une interface réseau (770, 774) vers un réseau radio mobile cellulaire numérique, dans lequel, pour des transferts de la monnaie cryptographique, sont utilisées des adresses cibles qui ne sont employées qu'une seule fois, le serveur de transaction (708) est raccordé à internet, où le transfert a lieu au moyen d'un ordinateur serveur (700) raccordé à internet par lequel un nouveau noeud client de la monnaie cryptographique est formé, où l'ordinateur serveur a accès à une banque de données d'enregistrement (780) dans laquelle sont enregistrés les numéros de téléphone de participants enregistrés,
le procédé comprenant en outre :
a) l'envoi d'une information (802) du premier appareil radio mobile à l'ordinateur serveur par le biais d'internet, où l'information contient les premier et deuxième numéros de téléphone,
b) l'exécution d'une interrogation de la banque de données de la banque de données d'enregistrement avec le deuxième numéro de téléphone servant de clé d'accès, par l'ordinateur serveur, afin de vérifier si le deuxième participant est déjà enregistré,
c) dans le cas où le deuxième participant n'est pas enregistré :
i. l'envoi d'une adresse cible (804) de l'ordinateur serveur à partir de l'ordinateur serveur vers le premier appareil radio mobile,
ii. la création d'une information de transaction (806) par le premier appareil radio mobile, dans lequel l'information de transaction contient le montant à transférer et l'adresse cible de l'ordinateur serveur,
iii. l'envoi de l'information de transaction par le premier appareil radio mobile au serveur de transaction par le biais d'internet,
iv. la validation de l'information de transaction par le serveur de transaction à l'aide de la chaine de blocs,
v. l'envoi d'un message (810) de l'ordinateur serveur vers le deuxième appareil radio mobile par le biais d'une couche de signalisation du réseau radio mobile afin d'inciter le deuxième participant à l'enregistrement,
vi. l'installation du programme portefeuille (760') sur le deuxième appareil radio mobile pour la réalisation d'un nouveau noeud client de la monnaie cryptographique,
vii. la création d'une adresse cible du deuxième appareil radio mobile par le programme portefeuille installé sur le deuxième appareil radio mobile,
viii. l'envoi de l'adresse cible (812) du deuxième appareil radio mobile à partir du deuxième appareil radio mobile vers l'ordinateur serveur,
ix. la création d'une nouvelle information de transaction (816) par l'ordinateur serveur, où la nouvelle information de transaction contient le montant et l'adresse cible du deuxième appareil radio mobile, et l'envoi de la nouvelle information de transaction par l'ordinateur serveur vers le serveur de transaction par le biais d'internet,
x. la validation de la nouvelle information de transaction par le serveur de transaction à l'aide de la chaine de blocs,
d) dans le cas où le deuxième participant est enregistré :
i. l'envoi d'une adresse cible (820) du deuxième appareil radio mobile à partir de l'ordinateur serveur vers le premier appareil radio mobile, dans lequel l'ordinateur serveur accède à l'adresse cible du deuxième appareil radio mobile à l'aide du deuxième numéro de téléphone servant de clé d'accès,
ii. la création d'un message de transaction (822) par le premier appareil radio mobile, où le message de transaction contient le montant et l'adresse cible du deuxième appareil radio mobile,
iii. l'envoi du message de transaction par le premier appareil radio mobile vers le serveur de transaction par le biais d'interne,
iv. la validation de l'information de transaction par le serveur de transaction à l'aide de la chaine de blocs.

11. Système informatique serveur, lequel est conçu en tant que serveur de transaction dans le procédé selon l'une des revendications 1 à 10.

12. Ordinateur serveur, lequel est conçu en tant qu'ordinateur serveur dans le procédé selon la revendication 10.

13. Système informatique client, lequel est conçu en tant que client dans le procédé selon l'une des revendications 1 à 10.

14. Système informatique, lequel est conçu en tant qu'instance de création de devises dans le procédé selon la revendication 10.

15. Système de traitement de données (200) avec un système d'ordinateur serveur selon la revendication 11 et au moins un premier et un deuxième systèmes informatiques de client selon la revendication 13, le système de traitement de données comprenant en outre un système informatique selon la revendication 14, et/ou le système de traitement de données comprenant de préférence en outre un ordinateur serveur selon la revendication 12.
